# EUROPEAN PATENT APPLICATION

(11) **EP 4 160 324 A1**
(43) Date of publication of application: **05.04.2023**
(21) Application number: 21817187.4
(22) Date of filing: 01.06.2021
(51) Int. Cl.: G05B 11/36, C02F 1/44, G05B 13/02, G05B 13/04, G06N 20/00

(54) **LEARNING MODEL GENERATING DEVICE, INFERRING DEVICE, AND AERATION AMOUNT CONTROL DEVICE**

(30) Priority: 01.06.2020 JP 2020095365
(71) Applicant: Kubota Corporation, Osaka 556-8601 (JP)
(72) Inventor: KOBAYASHI, Hiroyuki, Amagasaki-shi, Hyogo 661-8567 (JP); SUZUKI, Nobukazu, Amagasaki-shi, Hyogo 661-8567 (JP)
(74) Representative: Graf von Stosch Patentanwaltsgesellschaft mbH
(86) International application number: PCT/JP2021/020800
(87) International publication number: WO 2021/246393

(57) **Abstract**

A future state of a separation membrane is inferred to perform a stable membrane filtration operation. A learning model generation device (1) includes: an input data acquisition section (21) configured to acquire input data derived from operation data that is measured during a membrane filtration operation, the operation data including a membrane filtration pressure and a diffused air volume; and a learning section (13) configured to generate a learning model (31) for inferring the state of the separation membrane, by means of machine learning using the acquired input data as an input.

## Description

### Technical Field

The present invention relates to a learning model generation device and the like which are applied in a membrane filtration process in which, while air is diffused through a separation membrane that is disposed so as to be immersed in a water to be treated, a treated water that has passed through the separation membrane is obtained.

### Background Art

Patent Literature 1 discloses the technique in which, at a control time at which a diffused air volume is controlled, a comparison with a target transmembrane pressure increase speed selected on the basis of a preset threshold value and an organic substance concentration is made based on the amount of change in transmembrane pressure, a rate of the change in transmembrane pressure, or a transmembrane pressure increase speed from a certain time point in the past, so that the diffused air volume is determined.

### Citation List

### [Patent Literature]

[Patent Literature 1] Japanese Patent No. 6342101

### Summary of Invention

### Technical Problem

In the membrane filtration process performed by a membrane separation device, the phenomenon in which the transmembrane pressure suddenly increases (TMP jump) can occur with, for example, the progress of fouling on the membrane surface. However, in the technique disclosed in Patent Literature 1, in a case where the above-described fouling progresses at the control time, in other words, in a case where there is an anomaly in the separation membrane, the phenomenon of a sudden increase in the transmembrane pressure may occur in the future. This may result in interference with the operation of the membrane separation device.

An object of an aspect of the present invention is to provide a learning model generation device and the like for inferring a future state of the separation membrane so that a stable membrane filtration operation is performed.

### Solution to Problem

In order to solve the above-described problem, a learning model generation device in accordance with an aspect of the present invention includes: an input data acquisition section configured to acquire input data derived from operation data that is measured during a membrane filtration operation which is carried out by a membrane separation device, the operation data including a membrane filtration pressure and a diffused air volume, the membrane separation device comprising: a separation membrane disposed so as to be immersed in a water to be treated; and an air diffusion device configured to perform air diffusion through a membrane surface of the separation membrane, the membrane separation device being configured to obtain a treated water that has passed through the separation membrane while causing the air diffusion device to perform the air diffusion; and a learning section configured to generate a learning model for inferring a state of the separation membrane, by means of machine learning using the acquired input data as an input.

According to the above-described configuration, it is possible to generate the learning model that infers the state of the separation membrane on the basis of the operation data including the membrane filtration pressure and the diffused air volume. With the achievement of the inference of the state of the separation membrane, it is possible to control the diffused air volume on the basis of the inferred state of the separation membrane. Thus, it is possible to perform a stable membrane filtration operation while maintaining a normal state of the separation membrane (for example, a state in which the possibility of the occurrence of a rapid increase in transmembrane pressure is reduced).

Further, the learning model generation device in accordance with an aspect of the present invention may be such that: the membrane filtration operation is an intermittent operation; the input data derived from the membrane filtration pressure includes at least one selected from the group consisting of a maximum value of the membrane filtration pressure, a minimum value of the membrane filtration pressure, a standard deviation value of the membrane filtration pressure, an average value of the membrane filtration pressure, and a transmembrane pressure, which are in a unit period consisting of an operation period and a pause period that follows the operation period, and a fluctuation speed of the transmembrane pressure, a fluctuation amount of the transmembrane pressure, and a fluctuation rate of the transmembrane pressure, which are in a predetermined period before the unit period; and the input data derived from the diffused air volume includes at least one selected from the group consisting of an average value of the diffused air volume in the unit period and an integrated value of the diffused air volume in the predetermined period.

According to the above-described configuration, the learning model is generated with use of at least one of pieces of the input data having various feature amounts derived from the membrane filtration pressure and the diffused air volume. Thus, it is possible to improve the inference accuracy of the learning model.

Further, the learning model generation device in accordance with an aspect of the present invention may be such that the operation data further includes a membrane filtration flow rate that is measured during the membrane filtration operation.

According to the above-described configuration, the learning model is generated further with use of the input data derived from the membrane filtration flow rate. Thus, it is possible to improve the inference accuracy of the learning model.

Further, the learning model generation device in accordance with an aspect of the present invention may be such that: the membrane filtration operation is an intermittent operation; and the input data derived from the membrane filtration flow rate includes at least one selected from the group consisting of an average value of the membrane filtration flow rate in a unit period consisting of an operation period and a pause period that follows the operation period, and an integrated value of the membrane filtration flow rate in a predetermined period before the unit period.

According to the above-described configuration, the learning model is generated further with use of one of the average value of the membrane filtration flow rate in the unit period and the integrated value of the membrane filtration flow rate in the predetermined period, both of which are derived from the membrane filtration flow rate. Thus, it is possible to improve the inference accuracy of the learning model.

Further, the learning model generation device in accordance with an aspect of the present invention may be such that the learning model generation device further includes a training data generation section configured to generate training data in which the input data and a label indicating the state of the separation membrane with respect to the input data are associated with each other, wherein the learning section generates the learning model by means of supervised learning using the generated training data.

According to the above-described configuration, the learning model is generated by means of supervised learning. Thus, it is possible to perform inference with a high degree of accuracy.

Further, the learning model generation device in accordance with an aspect of the present invention may be such that the label includes a normality label, which is associated with the input data in a case where the input data indicates that the state of the separation membrane will become normal, and an anomaly label, which is associated with the input data in a case where the input data indicates that the state of the separation membrane will become anomalous.

According to the above-described configuration, in inferring the state of the separation membrane, it is possible to infer, with a high degree of accuracy, whether the separation membrane will become normal or anomalous. Thus, it is possible to control the diffused air volume in an appropriate manner (to achieve a volume close to a minimum volume required) on the basis of the inference result so that the separation membrane will become normal.

Further, the learning model generation device in accordance with an aspect of the present invention may be such that the label further includes an intermediate label which is associated with the input data in a case where the input data indicates that the state of the separation membrane will become an intermedia state between normality and anomaly.

According to the above-described configuration, it is possible to infer whether the separation membrane will become normal or anomalous, and, in addition, infer that the separation membrane will become in an intermediate state between normality and anomaly. Thus, it is possible to infer the state of the separation membrane with a higher degree of accuracy.

Further, the learning model generation device in accordance with an aspect of the present invention may be such that the learning section generates, by means of unsupervised learning, the learning model which includes clusters as a learning result.

According to the above-described configuration, it possible to easily generate the learning model even in a situation where sufficient training data cannot be prepared.

Further, the learning model generation device in accordance with an aspect of the present invention may be such that the learning section acquires data inputted to the learning model when the state of the separation membrane is inferred with use of the learning model, and updates the learning model by means of machine learning using the acquired data as an input.

According to the above-described configuration, the learning model is updated by means of machine learning using the input data that is inputted in an inference step. Thus, it is possible to improve the inference accuracy of the learning model each time the inference is performed.

In order to solve the above-described problem, an inference device in accordance with an aspect of the present invention includes: an access section configured to make access to a learning model generated by means of machine learning on the basis of operation data that is measured during a membrane filtration operation which is carried out by a membrane separation device, the operation data including a membrane filtration pressure and a diffused air volume, the membrane separation device comprising: a separation membrane disposed so as to be immersed in a water to be treated; and an air diffusion device configured to perform air diffusion through a membrane surface of the separation membrane, the membrane separation device being configured to obtain a treated water that has passed through the separation membrane while causing the air diffusion device to perform the air diffusion, the learning model being a learning model for inferring the state of the separation membrane; an input data acquisition section configured to acquire input data derived from the operation data that is measured during the membrane filtration operation; and an inference section configured to infer the state of the separation membrane from the acquired input data with use of the learning model to which the access is made.

According to the above-described configuration, it is possible to infer the state of the separation membrane on the basis of the operation data including the membrane filtration pressure and the diffused air volume. With the achievement of the inference of the state of the separation membrane, it is possible to control the diffused air volume on the basis of the inferred state of the separation membrane. Thus, it is possible to perform a stable membrane filtration operation while maintaining a normal state of the separation membrane (for example, a state in which the possibility of the occurrence of a rapid increase in transmembrane pressure is reduced).

Further, the inference device in accordance with an aspect of the present invention may be such that the membrane filtration operation is an intermittent operation; the input data acquisition section acquires the input data derived from the operation data at intervals of a unit period consisting of an operation period and a pause period that follows the operation period; and the inference section infers the state of the separation membrane from the acquired input data at the intervals of the unit period.

According to the above-described configuration, the state of the separation membrane is inferred at intervals of the unit period during the membrane filtration operation. Thus, it is possible to quickly check a sudden change in the state of the separation membrane.

Further, the inference device in accordance with an aspect of the present invention may be such that: the membrane filtration operation is an intermittent operation; the input data derived from the membrane filtration pressure includes at least one selected from the group consisting of a maximum value of the membrane filtration pressure, a minimum value of the membrane filtration pressure, a standard deviation value of the membrane filtration pressure, an average value of the membrane filtration pressure, and a transmembrane pressure, which are in a unit period consisting of an operation period and a pause period that follows the operation period, and a fluctuation speed of the transmembrane pressure, a fluctuation amount of the transmembrane pressure, and a fluctuation rate of the transmembrane pressure, which are in a predetermined period before the unit period; and the input data derived from the diffused air volume includes at least one selected from the group consisting of an average value of the diffused air volume in the unit period and an integrated value of the diffused air volume in the predetermined period.

According to the above-described configuration, inference is performed with use of the learning model generated with use of at least one of pieces of the input data having various feature amounts derived from the membrane filtration pressure and the diffused air volume. Thus, it is possible to improve the inference accuracy.

Further, the inference device in accordance with an aspect of the present invention may be such that the operation data further includes a membrane filtration flow rate that is measured during the membrane filtration operation.

According to the above-described configuration, inference is performed with use of the learning model generated further with use of input data derived from the membrane filtration flow rate. Thus, it is possible to improve the inference accuracy.

Further, the inference device in accordance with an aspect of the present invention may be such that the membrane filtration operation is an intermittent operation; and the input data derived from the membrane filtration flow rate includes at least one selected from the group consisting of an average value of the membrane filtration flow rate in a unit period consisting of an operation period and a pause period that follows the operation period, and an integrated value of the membrane filtration flow rate in a predetermined period before the unit period.

According to the above-described configuration, inference is performed with use of the learning model generated further with use of one of the average value of the membrane filtration flow rate in the unit period and the integrated value of the membrane filtration flow rate in the predetermined period, both of which are derived from the membrane filtration flow rate. Thus, it is possible to improve the inference accuracy.

Further, the inference device in accordance with an aspect of the present invention may be such that the learning model is generated by means of supervised learning using training data that includes a label indicating the state of the separation membrane.

According to the above-described configuration, the learning model generated by means of supervised learning is used. Thus, it is possible to perform inference with a high degree of accuracy.

Further, the inference device in accordance with an aspect of the present invention may be such that the label includes: a label indicating that the state of the separation membrane will become normal; and a label indicating that the state of the separation membrane will become anomalous.

According to the above-described configuration, in inferring the state of the separation membrane, it is possible to infer, with a high degree of accuracy, whether the separation membrane will become normal or anomalous. Thus, it is possible to control the diffused air volume in an appropriate manner (to achieve a volume close to a minimum volume required) on the basis of the inference result so that the separation membrane will become normal.

Further, the inference device in accordance with an aspect of the present invention may be such that the label further includes a label indicating that the state of the separation membrane will become an intermediate state between normality and anomaly.

According to the above-described configuration, it is possible to infer whether the separation membrane will become normal or anomalous, and, in addition, infer that the separation membrane will become in an intermediate state between normality and anomaly. Thus, it is possible to infer the state of the separation membrane with a higher degree of accuracy.

Further, the inference device in accordance with an aspect of the present invention may be such that the learning model is a learning model that is generated by means of unsupervised learning and includes clusters as a learning result.

According to the above-described configuration, it possible to easily infer the state of the separation membrane even in a situation where sufficient training data cannot be prepared.

Further, the inference device in accordance with an aspect of the present invention may be such that: an output value of the learning model is an outlier or a value which is not the outlier; in a case where the output value is the outlier, the inference section infers that the state of the separation membrane will become anomalous; and in a case where the output value is not the outlier, the inference section infers that the state of the separation membrane will become normal.

According to the above-described configuration, it possible to easily infer the state of the separation membrane with use of a learning model capable of performing outlier detection.

Further, a diffused air volume control device in accordance with an aspect of the present invention may determine a level of a diffused air volume in accordance with a state of a separation membrane inferred by the above-described inference device and control an air diffusion device so that the air diffusion device performs air diffusion at the determined level.

According to the above-described configuration, the level of the diffused air volume is automatically determined in accordance with the inferred state of the separation membrane. This eliminates the need for an operator who performs the membrane filtration operation to adjust the level of the diffused air volume. As a result, it is possible to reduce the workload of the operator.

Further, a diffused air volume control device in accordance with an aspect of the present invention may determine a current level of the diffused air volume in accordance with the state inferred by the inference device and a level determined most recently by the diffused air volume control device.

According to the above-described configuration, a most recent diffused air volume level is also taken into account to determine the level of the diffused air volume. Thus, it is possible to determine a more appropriate diffused air volume level as compared to a configuration in which a most recent diffused air volume level is not taken into account.

The learning model generation device, the inference device, and the diffused air volume control device in accordance with each aspect of the present invention may be realized by a computer. In this case, the present invention encompasses (i) a control program for the learning model generation device, the inference device, and the diffused air volume control device for causing the computer to implement the learning model generation device, the inference device, and the diffused air volume control device by causing the computer to operate as each section (software element) provided in the learning model generation device, the inference device, and the diffused air volume control device and (ii) a computer-readable storage medium in which the control program is stored.

### Advantageous Effects of Invention

According to an aspect of the present invention, it is possible to infer a future state of the separation membrane so that a stable membrane filtration operation is performed.

### Brief Description of Drawings

Fig. 1 is a diagram illustrating an overview of a state inference system for a separation membrane in accordance with Embodiment 1 of the present invention.
Fig. 2 is a graph showing changes over time in membrane filtration pressure in a membrane filtration operation.
Fig. 3 is a block diagram illustrating an example of configurations of main parts of a learning model generation device and an inference device.
Fig. 4 is a view illustrating a specific example of input data.
Fig. 5 is a view for describing predetermined conditions for determining the state of the separation membrane.
Fig. 6 is a view illustrating a specific example of training data.
Fig. 7 is a flowchart showing an example of a flow of a learning model generation process.
Fig. 8 is a flowchart showing an example of a flow of a learning model update process.
Fig. 9 is a flowchart showing an example of a flow of an inference process and a diffused air volume control process.
Fig. 10 is a view illustrating a specific example of training data.
Fig. 11 is a block diagram illustrating an example of configurations of main parts of a learning model generation device and an inference device in accordance with Embodiment 2 of the present invention.
Fig. 12 is a flowchart showing an example of a flow of a learning model generation process.
Fig. 13 is a flowchart showing an example of a flow of an inference process and a diffused air volume control process.
Fig. 14 is a diagram illustrating an overview of processing in accordance with Reference Embodiment of the present invention.
Fig. 15 is a block diagram illustrating an example of configurations of main parts of a regression model generation device and an inference device in accordance with Reference Embodiment.
Fig. 16 is a flowchart showing an example of a flow of an inference process and a diffused air volume control process.

### Description of Embodiments

### [Embodiment 1]

### <Overview of state inference system for separation membrane>

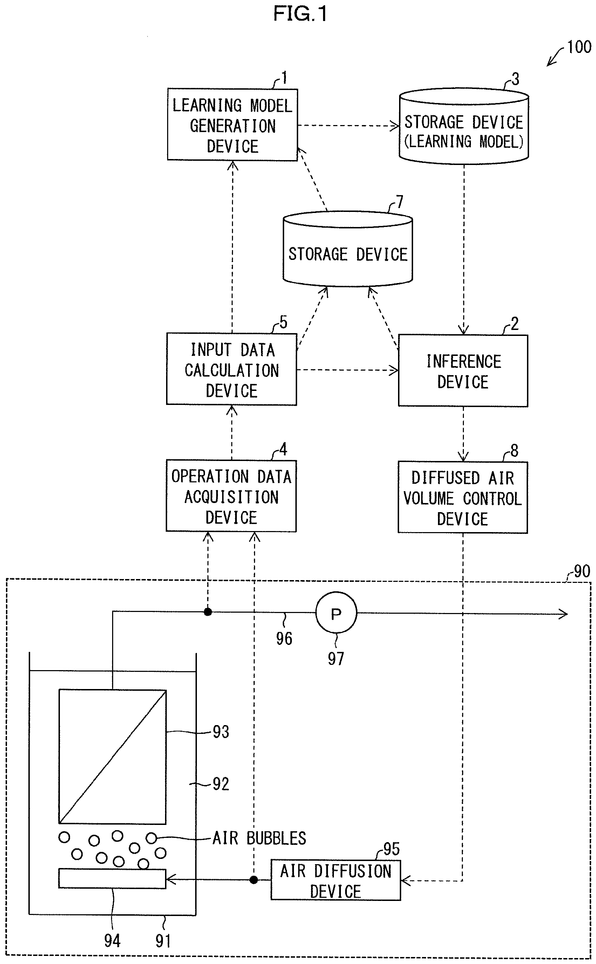

Fig. 1 is a diagram illustrating an overview of a state inference system 100 for a separation membrane in accordance with Embodiment 1. The state inference system 100 is a system that uses a learning model generated by means of machine learning to infer the state of a separation membrane 93 used for a membrane filtration operation and controls the volume of diffused air to be supplied to the separation membrane 93 in accordance with the result of the inference. The "state" of the separation membrane 93 means the extent to which the separation membrane 93 is contaminated. A normal state is a state in which the level of contamination is low and in which the phenomenon where a transmembrane pressure increases rapidly is less likely to occur.

The state inference system 100 includes a learning model generation device 1, an inference device 2, a storage device 3, an operation data acquisition device 4, an input data calculation device 5, an diffused air volume control device 8, and a membrane separation device 90, and may further include a storage device 7.

Note that the learning model generation device 1, the inference device 2, the storage device 3, the operation data acquisition device 4, the input data calculation device 5, and the storage device 7 may be provided by any methods and in any locations. However, a preferable typical example is such that the operation data acquisition device 4 and the diffused air volume control device 8 are provided as programmable logic controllers (PLCs), the inference device 2, the input data calculation device 5, and the storage device 7 are provided in the form of edge computing, and the learning model generation device 1 and the storage device 3 are provided in the form of cloud computing.

### (Membrane separation device 90)

The membrane separation device 90 is a device that carries out a membrane filtration operation in which a water to be treated is subjected to filtration with use of a separation membrane to obtain a treated water that has passed through the separation membrane. The treated water can also be expressed as water to be treated from which impurities have been removed by filtration.

The membrane separation device 90 includes a membrane separation tank 91, a separation membrane 93, an air diffusion tube 94, an air diffusion device 95, filtered water piping 96, and a filtration pump 97. The membrane separation tank 91 stores a water 92 to be treated. The separation membrane 93 is disposed so as to be immersed in the water 92 to be treated to filter the water 92 to be treated. The filtered water piping 96 is connected to the membrane separation tank 91 via the separation membrane 93 and distributes the treated water obtained by filtration of the water 92 to be treated with use of the separation membrane 93. The filtration pump 97 is connected to the separation membrane 93 via the filtered water piping 96 and allows the treated water to flow out. The air diffusion device 95 supplies air for removing the impurities adhering to the separation membrane 93. In other words, the air diffusion device 95 performs air diffusion through a membrane surface of the separation membrane 93. The air diffusion tube 94 is disposed immediately below the separation membrane 93 and uses the air supplied from the air diffusion device 95 to supply air bubbles flown upwards from below the separation membrane 93.

The membrane separation tank 91 only needs to be able to receive and store the water 92 to be treated flowing into the membrane separation tank 91, and only needs to be made of a material that does not leak water, such as concrete, stainless steel, or resin. Further, the structure of the membrane separation tank 91 only needs to be a structure that does not leak water.

The separation membrane 93 only needs to be a membrane capable of separating a solid and a liquid, such as a hollow fiber membrane or a flat membrane. Examples of the separation membrane 93 include, but not limited to, a reverse osmosis (RO) membrane, a nanofiltration (NF) membrane, an ultrafiltration (UF) membrane, a microfiltration (MF) membrane, and the like.

The air diffusion tube 94 only needs to be capable of supplying air bubbles, and, as a material of which the air diffusion tube 94 is made, for example, glass, stainless steel, sintered metal, or resin can be used. The air diffusion device 95 only needs to be a device capable of pumping air, such as a blower.

### (Operation data acquisition device 4)

The operation data acquisition device 4 uses various sensors and the like to acquire operation data measured during the membrane filtration operation. The operation data in accordance with Embodiment 1 includes at least a membrane filtration pressure and a diffused air volume, and more preferably includes a membrane filtration flow rate. The membrane filtration pressure is acquired from, for example, a pressure gauge disposed in the filtered water piping 96 between the separation membrane 93 and the filtration pump 97. The diffused air volume is the volume of air supplied by the air diffusion device 95 and is acquired directly from the air diffusion device 95. The membrane filtration flow rate is acquired from, for example, a flowmeter disposed on the filtered water piping 96. The operation data acquisition device 4 transmits the acquired operation data to the input data calculation device 5.

### (Input data calculation device 5)

The input data calculation device 5 derives, from received operation data, input data to be inputted to the learning model generation device 1 and the inference device 2. The input data is data representing a feature amount of the operation data, and can be operation data itself or can be acquired by performing computation on the operation data. Then, in a phase of generating a learning model, the input data calculation device 5 directly transmits the calculated input data to the learning model generation device 1 or transmits the calculated input data to the storage device 7 for storing the input data. In a phase of inferring the state of the separation membrane 93, the input data calculation device 5 transmits the calculated input data to the inference device 2. Details of the input data will be described later.

### (Learning model generation device 1)

The learning model generation device 1 generates a learning model for inferring the state of the separation membrane 93 by means of machine learning using the received input data as an input, and stores it in the storage device 3. Details of the learning model generation will be described later.

### (Storage device 3)

The storage device 3 stores the learning model generated by the learning model generation device 1. Note that the storage device 3 may store programs and data other than the learning model.

### (Inference device 2)

The inference device 2 makes access to the learning model stored in the storage device 3 and uses the learning model to infer the state of the separation membrane 93 from the input data having been received from the input data calculation device 5. Details of the inference of the state of the separation membrane 93 will be described later.

### (Diffused air volume control device 8)

The diffused air volume control device 8 determines, in accordance with the inference result from the inference device 2, the level of the volume of air diffused by the air diffusion device 95 (hereinafter referred to simply as "diffused air volume level"), and controls the air diffusion device 95 so that the air diffusion device 95 performs air diffusion at the determined diffused air volume level. As an example, in a case where the inference result from the inference device 2 is "normality", the diffused air volume control device 8 decreases the diffused air volume level to a value smaller than a current value. In a case where the inference result from the inference device 2 is "anomaly", the diffused air volume control device 8 increases the diffused air volume level to a value larger than the current value.

An increment of the diffused air volume level and a decrement thereof may be a fixed value or may be a variable value. In the latter case, as an example, the diffused air volume control device 8 may determine a variable value to be set this time, in accordance with the most recent increase or decrease of the diffused air volume level.

For example, in a case where "normality" has been acquired as the inference result, the decrement of the diffused air volume level is decreased according to the number of times the diffused air volume level has most recently been increased, or the decrement of the diffused air volume level is increased according to the number of times the diffused air volume level has most recently been decreased. Conversely, for example, in a case where "anomaly" has been acquired as the inference result, the increment of the diffused air volume level is increased according to the number of times the diffused air volume level has most recently been increased, or the decrement of the diffused air volume level is decreased according to the number of times the diffused air volume level has most recently been decreased. Note that, in the following description, it is assumed that such an example is applied to the diffused air volume control device 8.

### <Cycle of membrane filtration operation>

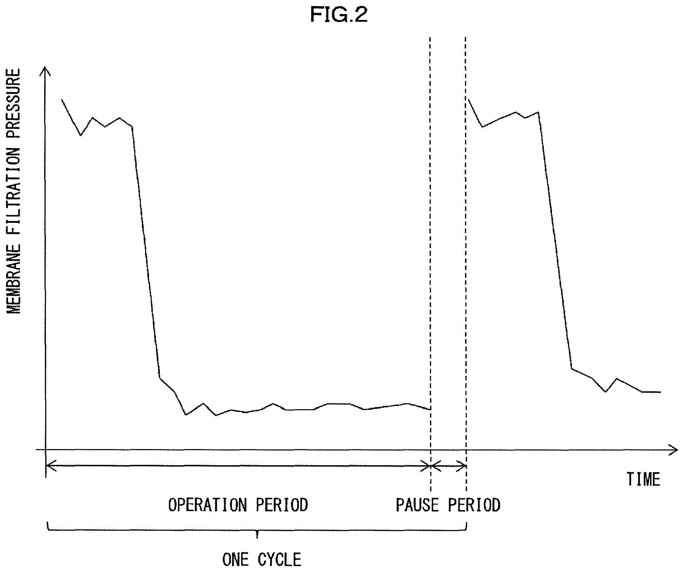

Fig. 2 is a graph showing changes over time in the membrane filtration pressure which is measured during the membrane filtration operation carried out by the membrane separation device 90. A cycle of the membrane filtration operation (which may be hereinafter referred to as "unit period") will be described with reference to Fig. 2. The cycle of the membrane filtration operation consists of an operation period (for example, about 5 minutes) during which the membrane filtration operation is carried out and a pause period (for example, about 1 minute) that follows the operation period and that is a period during which the membrane filtration operation is not carried out. The membrane filtration operation is an intermittent operation in which this cycle is repeated.

In the state inference system 100, as an example, it is preferable that, every time the pause period starts after the operation period ends, the input data calculation device 5 derives the input data with use of the operation data acquired during the operation period by the operation data acquisition device 4. Then, following this, the inference device 2 infers the state of the separation membrane 93 and controls the air diffusion device 95 in accordance with the inference result. This allows the state inference system 100 to infer the state of the separation membrane 93 for each cycle of the membrane filtration operation and then appropriately control the volume of air diffused by the air diffusion device 95.

### <Configuration of main part of learning model generation device 1>

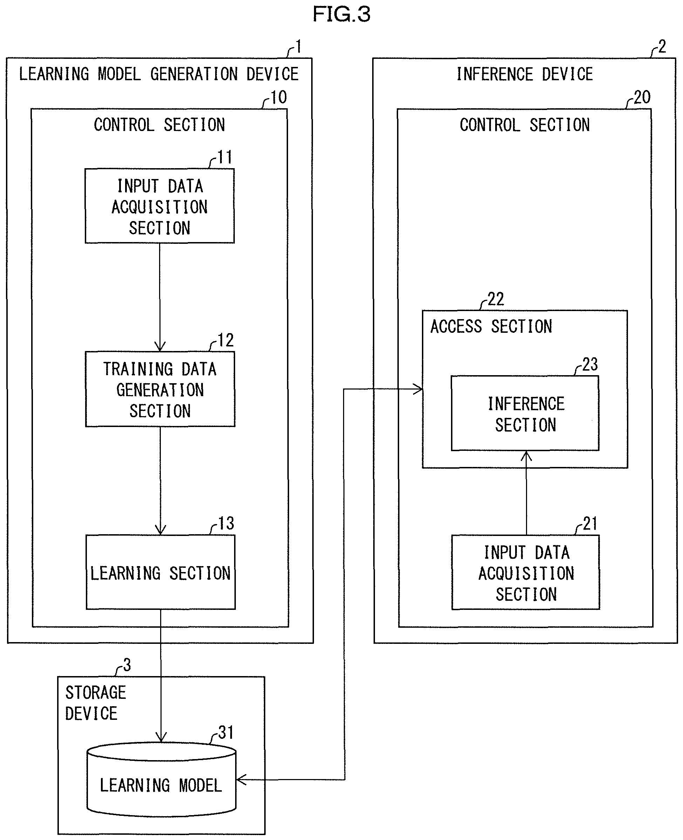

Fig. 3 is a block diagram illustrating an example of configurations of main parts of the learning model generation device 1 and the inference device 2.

The learning model generation device 1 includes a control section 10. The control section 10 centrally controls individual sections of the learning model generation device 1 and is realized, as an example, by a processor and a memory. In this example, the processor accesses a storage (not illustrated), loads a program (not illustrated) stored in the storage into the memory, and executes a series of instructions included in the program. This constitutes the individual sections of the control section 10.

The control section 10 includes, as the individual sections, an input data acquisition section 11, a training data generation section 12, and a learning section 13.

### (Input data acquisition section 11)

The input data acquisition section 11 acquires input data directly from the input data calculation device 5 or acquires input data from the storage device 7 that stores the input data having been calculated by the input data calculation device 5. Then, the input data acquisition section 11 outputs the acquired input data to the training data generation section 12.

### (Specific examples of input data)

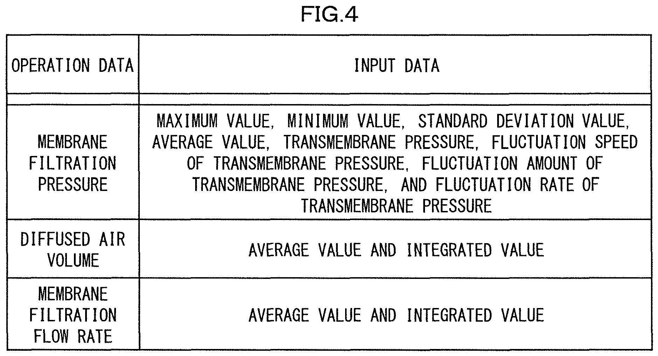

Fig. 4 is a view illustrating specific examples of the input data derived from the operation data. The input data calculation device 5 calculates, from the membrane filtration pressure which is the operation data, as an example, a maximum value of the membrane filtration pressure, a minimum value of the membrane filtration pressure, a standard deviation value of the membrane filtration pressure, an average value of the membrane filtration pressure, a transmembrane pressure, a fluctuation speed of the transmembrane pressure, a fluctuation amount of the transmembrane pressure, and a fluctuation rate of the transmembrane pressure.

The maximum value of the membrane filtration pressure (hereinafter referred to as "maximum membrane filtration pressure") is a maximum value of the membrane filtration pressure in a certain cycle of the membrane filtration operation (hereinafter referred to as "cycle of interest"). The minimum value of the membrane filtration pressure (hereinafter referred to as "minimum membrane filtration pressure") is a minimum value of the membrane filtration pressure in the cycle of interest. The standard deviation value of the membrane filtration pressure is a standard deviation value of the membrane filtration pressure in the cycle of interest. The average value of the membrane filtration pressure (hereinafter referred to as "average membrane filtration pressure") is an average value of the membrane filtration pressure in the cycle of interest.

The transmembrane pressure (TMP) is a difference between the pressure on the side of the water 92 to be treated and the pressure on the side of the treated water in the separation membrane 93. The fluctuation speed of the transmembrane pressure (hereinafter referred to simply as "fluctuation speed") is calculated as a slope of the transmembrane pressure (ΔTMP/ΔT) in a predetermined period (hereinafter referred to as "P") from a predetermined time point in the cycle of interest. Note that P is selected as appropriate from several hours to several days. As an example, the fluctuation speed may be calculated as a slope of a regression model (linear regression) of changes over time in the transmembrane pressure in P. At this time, the fluctuation speed may not take a negative value. The fluctuation amount of the transmembrane pressure (hereinafter referred to simply as "fluctuation amount") refers to a fluctuation amount in P. As an example, the fluctuation amount is calculated as a difference between a value of TMP at a predetermined time point and a value of TMP at a time point when P has lapsed. The fluctuation rate of the transmembrane pressure (hereinafter referred to simply as "fluctuation rate") refers to a fluctuation rate in P. As an example, the fluctuation rate is calculated by dividing the fluctuation speed by the transmembrane pressure (ΔTMP/(TMP×ΔT)).

Further, the input data calculation device 5 calculates, from the diffused air volume which is the operation data, as an example, an average value of the diffused air volume and an integrated value of the diffused air volume. The average value of the diffused air volume (hereinafter referred to as "average diffused air volume") is an average value of the diffused air volume in the cycle of interest. The integrated value of the diffused air volume (hereinafter referred to as "integrated diffused air volume") is an integrated value of the diffused air volume in P, and is calculated, as an example, as an integrated value of the average diffused air volume in P.

Further, the input data calculation device 5 calculates, from the membrane filtration flow rate which is the operation data, as an example, an average value of the membrane filtration flow rate and an integrated value of the membrane filtration flow rate. The average value of the membrane filtration flow rate (hereinafter referred to as "average membrane filtration flow rate") is an average value of the membrane filtration flow rate in the cycle of interest. The integrated value of the membrane filtration flow rate (hereinafter referred to as "integrated membrane filtration flow rate") is an integrated value of the membrane filtration flow rate in P, and is calculated, as an example, as an integrated value of the average membrane filtration flow rate in P.

Although not illustrated, time information indicative of a time at which the operation data that serves as a derivation source of the input data has been acquired is assumed to be associated with the input data.

### (Training data generation section 12)

The training data generation section 12 generates training data in which input data and a label indicating the state of the separation membrane 93 with respect to the input data are associated with each other. Then, the training data generation section 12 outputs the generated training data to the learning section 13.

The label includes, for example, a "normality label" which is associated with input data indicating that a future state of the separation membrane 93 will become normal, and an "anomaly label" which is associated with input data indicating that the future state of the separation membrane 93 will become anomalous. The types of labels are not limited to two types, and may be three or more types.

The association between the input data and the label may be performed manually in accordance with a judgment made by a skilled worker or the like or may be performed automatically. In a case where the association is performed manually, the training data generation section 12 may provide an input/output interface for performing the association. The following will describe an example of a method for automatically performing the association.

The training data generation section 12 first identifies an operation status at a time when operation data which serves as a derivation source of input data of interest has been acquired (hereinafter referred to as "current time"). As an example of conditions for the identification, preferable conditions are, for example, the following two conditions: a first condition where the fluctuation speed is less than a first predetermined value; and a second condition where the transmembrane pressure is less than a second predetermined value. These conditions are typical conditions under which the state of the separation membrane 93 is normal. If these conditions are satisfied, the state of the separation membrane 93 can be regarded as normal. Note that the first predetermined value and the second predetermined value are, but not limited to, for example, 0.08 kPa/h and 10 kPa, respectively.

Next, the training data generation section 12 identifies input data with which time information indicative of a time that is a first predetermined time ahead of the current time (hereinafter referred to as "first input data") is associated, and identifies input data with which time information indicative of a time that is a second predetermined time ahead of the current time (hereinafter referred to as "second input data") is associated. The first predetermined time and the second predetermined time are, but not limited to, for example, 3 hours and 24 hours, respectively.

Then, the training data generation section 12 associates, with the first input data, whether or not the first condition at the current time is satisfied. That is, for example, "whether or not the fluctuation speed after 3 hours is less than the first predetermined value" is associated with the first input data.

Further, the training data generation section 12 associates, with the second input data, whether or not the second condition at the current time is satisfied. That is, for example, "whether or not the transmembrane pressure after 24 hours is less than the second predetermined value" is associated with the second input data.

Then, the training data generation section 12 repeats, for all pieces of input data to be processed, replacing the input data of interest with another input data and executing the above processing. As a result, a future operation status, which is (1) whether or not the first condition after the first predetermined time is satisfied and (2) whether or not the second condition after the second predetermined time is satisfied, is identified for each piece of input data.

Then, the training data generation section 12 determines that input data which satisfies both (1) and (2) above indicates that the future state of the separation membrane 93 will become normal, and associates a "normality label" with such input data. The training data generation section 12 determines that input data which does not satisfy even one of (1) and (2) above indicates that the future state of the separation membrane 93 will not become normal, and associates an "anomaly label" with such input data. As described above, the training data generation section 12 automatically associates the input data and the label with each other.

Note that the conditions for the identification are not limited to the first condition and the second condition. Further, the number of conditions for the identification is not limited to two, may be one, or may be three or more. An increased number of conditions for the identification enables accurate labeling based on a plurality of standards, and is thus expected to improve the inference accuracy of the inference device 2.

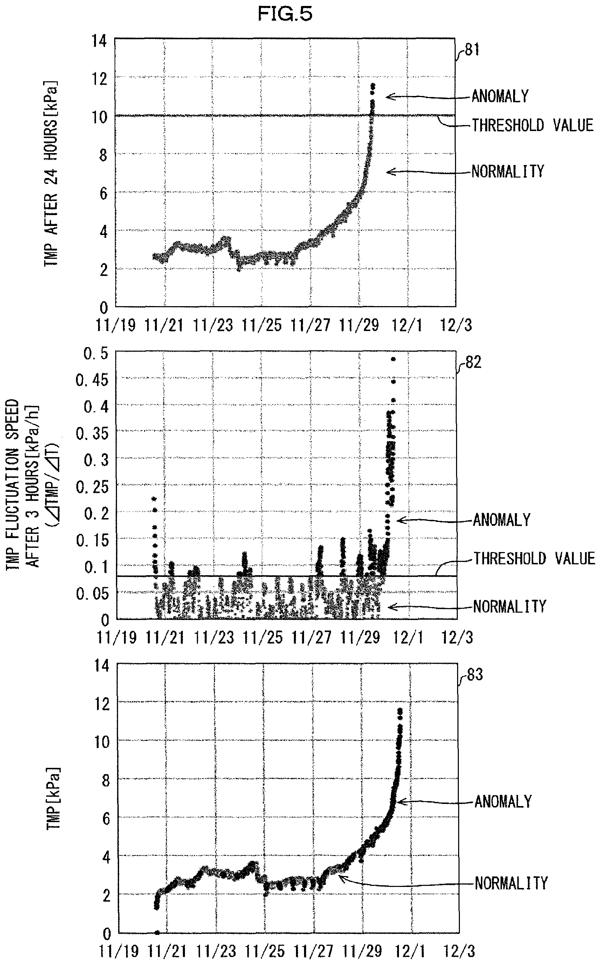

Fig. 5 is a view for describing the above-described conditions for the identification. A graph 81 visualizes whether or not the second condition is satisfied, that is, whether or not the transmembrane pressure after 24 hours is less than 10 kPa, which is associated with each input data. A graph 82 visualizes whether or not the first condition is satisfied, that is, whether or not the fluctuation speed after 3 hours is less than 0.08 kPa/h, which is associated with each input data. Note that, in each graph shown in Fig. 5, cases where the conditions are satisfied are indicated as "normality" (gray dots in Fig. 5), and cases where the conditions are not satisfied are indicated as "anomaly" (black dots in Fig. 5).

As an example of a condition for the identification differing from the first condition and the second condition, a condition where "the slope indicating the changes over time in the transmembrane pressure does not increase rapidly" may be used. A graph 83 visualizes, on the basis of such a condition, whether or not the slope of the transmembrane pressure of each input data increases rapidly.

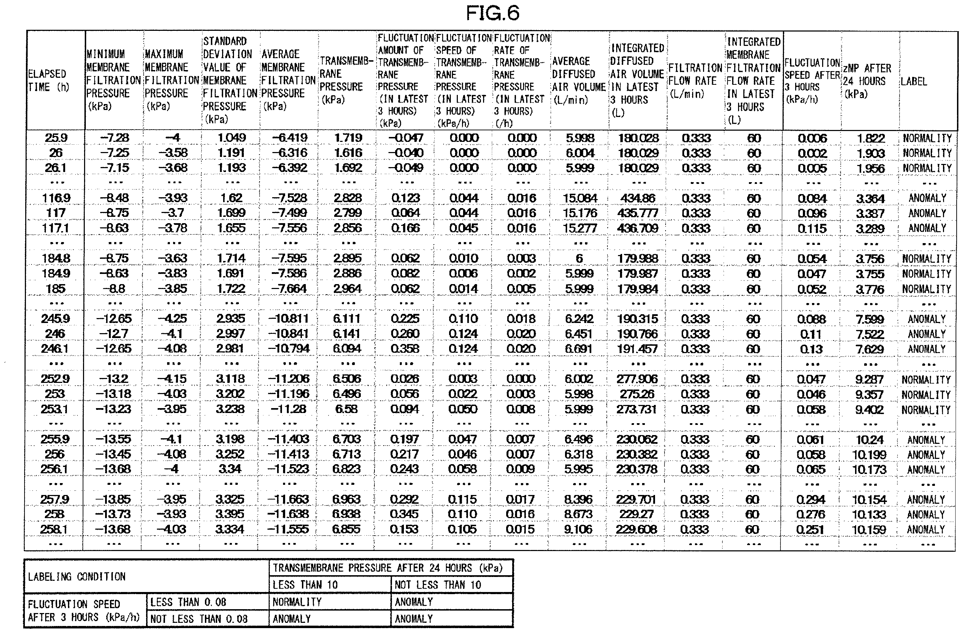

Fig. 6 is a view illustrating a specific example of training data. The training data generation section 12 associates the normality label with input data that satisfies both the first condition and the second condition. That is, the normality label is associated with the input data in which the fluctuation speed after 3 hours is less than 0.08 kPa/h, and the transmembrane pressure after 24 hours is less than 10 kPa. The anomaly label is associated with input data that does not satisfy at least one of the conditions. In Fig. 6, a label is associated at the right end of each record.

### (Learning section 13)

Referring back to Fig. 3, the learning section 13 will be described. The learning section 13 generates a learning model 31 for inferring the state of the separation membrane 93 by means of machine learning using, as an input, the training data generated by the training data generation section 12. The learning section 13 stores the generated learning model 31 in the storage device 3. The learning section 13 uses a plurality of pieces of training data acquired from the training data generation section 12 to generate the learning model 31 by a known algorithm such as a neural network (NN). In this way, the learning model 31 is generated that, when input data is inputted thereto, outputs a probability that the future state of the separation membrane 93 will become normal (or the probability that the future state of the separation membrane 93 will become anomalous).

### <Configuration of main part of inference device 2>

The inference device 2 includes a control section 20. The control section 20 centrally controls individual sections of the inference device 2 and is realized, as an example, by a processor and a memory. In this example, the processor accesses a storage (not illustrated), loads a program (not illustrated) stored in the storage into the memory, and executes a series of instructions included in the program. This constitutes the individual sections of the control section 20.

The control section 20 includes, as the individual sections, an input data acquisition section 21 and an access section 22.

### (Input data acquisition section 21)

The input data acquisition section 21 acquires input data from the input data calculation device 5 and outputs the input data to the access section 22. The input data is preferably derived from operation data measured in the most recent membrane filtration operation.

### (Access section 22)

The access section 22 makes access to the learning model 31 stored in the storage device 3. The access section 22 includes an inference section 23.

The inference section 23, with use of the learning model 31 to which the access section 22 has made access, infers the state of separation membrane 93 from the input data acquired from the input data acquisition section 21. Specifically, the inference section 23 acquires the probability that the state of the separation membrane 93 will become normal (or the probability that the state of the separation membrane 93 will become anomalous), which probability is outputted from the learning model 31 as a result of inputting the input data to the learning model 31. The probability is a probability that the future state of the separation membrane 93 will become normal in a case where the membrane filtration operation is continued under the current operation conditions.

Then, on the basis of a probability value acquired from the learning model 31, the inference section 23 infers whether the future state of the separation membrane 93 will become normal or anomalous. Specifically, in a case where the probability value is not smaller than a threshold value, the inference section 23 infers that the future state of the separation membrane 93 will become normal. In a case where the probability value is smaller than the threshold value, the inference section 23 infers that the future state of the separation membrane 93 will become anomalous. The threshold value is, but not limited to, for example, 50(%). Note that the states of the separation membrane 93 to be inferred are not limited to the two states of "normality" and "anomaly", and may be three or more states. The three states are, for example, "normality", "intermediate state between normality and anomaly", and "anomaly"

Then, the inference section 23 outputs this inference result to the diffused air volume control device 8. Note that the inference section 23 may output, to the diffused air volume control device 8, the probability itself acquired from the learning model 31 as the inference result.

Note that, in order to cause the learning model generation device 1 to update (that is, re-learn) the learning model 31 with use of the input data used for the inference, the control section 20 (the input data acquisition section 21 or the inference section 23) may store the input data in the storage device 7.

### <Flow of learning model generation process>

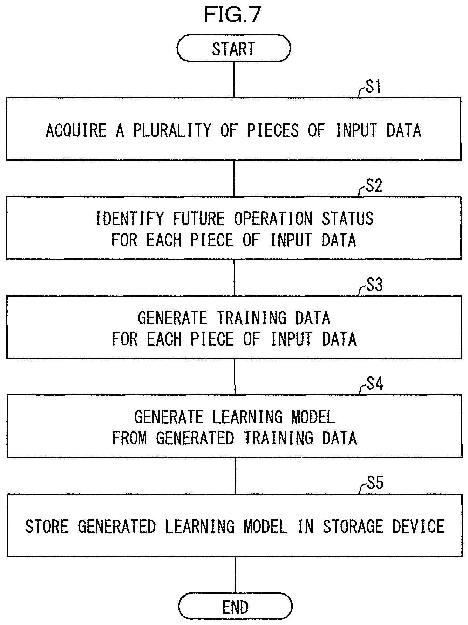

Fig. 7 is a flowchart showing an example of a flow of a learning model generation process executed by the learning model generation device 1. Note that the learning model generation process shown in Fig. 7 is a process of generating a new learning model 31 and is not a process of updating the learning model 31. In this example, it is assumed that, when both the above-described first condition where the fluctuation speed is less than the first predetermined value and the above-described second condition where the transmembrane pressure is less than the second predetermined value are satisfied, the state of the separation membrane 93 is normal. It is also assumed that input data and labels are associated with each other automatically.

First, the input data acquisition section 11 acquires a plurality of pieces of input data from the input data calculation device 5 or the storage device 7 (step S1; hereinafter the word "step" is omitted). The input data acquisition section 11 outputs the plurality of pieces of input data thus acquired to the training data generation section 12.

The training data generation section 12 identifies a future operation status for each piece of input data by the above-described method (S2). Specifically, the training data generation section 12 identifies, for each piece of input data, (1) whether or not the first condition after the first predetermined time is satisfied and (2) whether or not the second condition after the second predetermined time is satisfied.

Next, the training data generation section 12 associates a label indicating the future state of the separation membrane 93 with each piece of input data to generate training data (S3). Specifically, a "normality label" is associated with input data that has been identified that both (1) and (2) above are satisfied, while an "anomaly label" is associated with input data that has been identified that even one of (1) and (2) above is not satisfied. Then, the training data generation section 12 outputs the training data thus generated to the learning section 13.

Next, the learning section 13 generates, from the training data having been generated by the training data generation section 12, the learning model 31 that outputs the probability that the state of the separation membrane 93 will become normal (or the probability that the state of the separation membrane 93 will become anomalous) (S4). Finally, the learning section 13 stores the learning model 31 thus generated in the storage device 3 (S5). This is the end of the learning model generation process.

### <Flow of learning model update process>

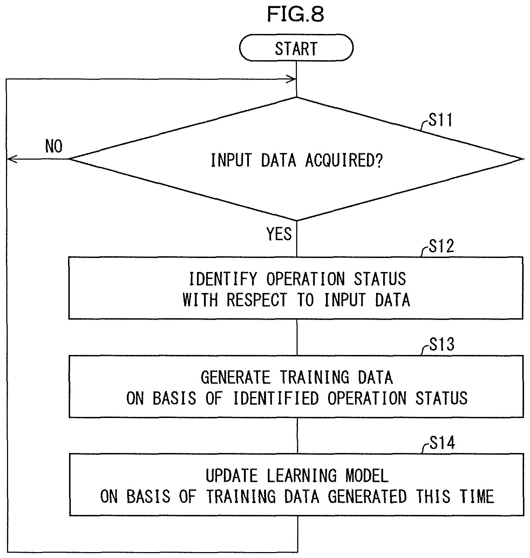

Fig. 8 is a flowchart showing an example of a flow of a learning model update process executed by the learning model generation device 1. The learning model update process shown in Fig. 8 is a process of updating the learning model 31 on the basis of the input data newly acquired by executing the membrane filtration operation after the learning model 31 has been generated in the learning model generation process shown in Fig. 7. Note that, in this example as well, it is assumed that, when both the above-described first condition where the fluctuation speed is less than the first predetermined value and the above-described second condition where the transmembrane pressure is less than the second predetermined value are satisfied, the state of the separation membrane 93 is normal. It is also assumed that input data and labels are associated with each other automatically.

The input data acquisition section 11 is on standby until the input data acquisition section 11 acquires, from the input data calculation device 5 or the storage device 7, the input data which the inference device 2 has used for the inference (S11). When the input data acquisition section 11 acquires the input data (YES in S11), the input data acquisition section 11 outputs the input data to the training data generation section 12.

The training data generation section 12 identifies an operation status at a time when operation data which serves as a derivation source of the acquired input data has been acquired (S12). That is, the training data generation section 12 identifies whether or not the first condition and the second condition at the time when the operation data has been acquired are satisfied.

Then, the training data generation section 12 associates whether or not the first condition is satisfied with the input data with which time information indicative of a time that is the first predetermined time ahead of the time when the operation data has been acquired has been associated. The training data generation section 12 also associates whether or not the second condition is satisfied with the input data with which time information indicative of a time that is the second predetermined time ahead of the time when the operation data has been acquired has been associated. Note that these pieces of input data have been acquired in the past and are stored in the storage device 7.

The training data generation section 12 performs labeling with respect to input data with which both (1) whether or not the first condition after the first predetermined time is satisfied and (2) whether or not the second condition after the second predetermined time is satisfied have been associated, in accordance with the result of the identification as to (1) and (2) above, so that the labeled input data is generated as training data (S13). Then, the training data generation section 12 outputs the generated training data to the learning section 13.

The learning section 13 performs re-learning based on the training data generated this time by the training data generation section 12, and updates the learning model 31 (S14). Then, the learning model update process returns to S11.

The learning model is updated in this way, so that the inference process executed by the inference device 2 can be adapted to the latest operation state.

### <Flow of inference process and diffused air volume control process>

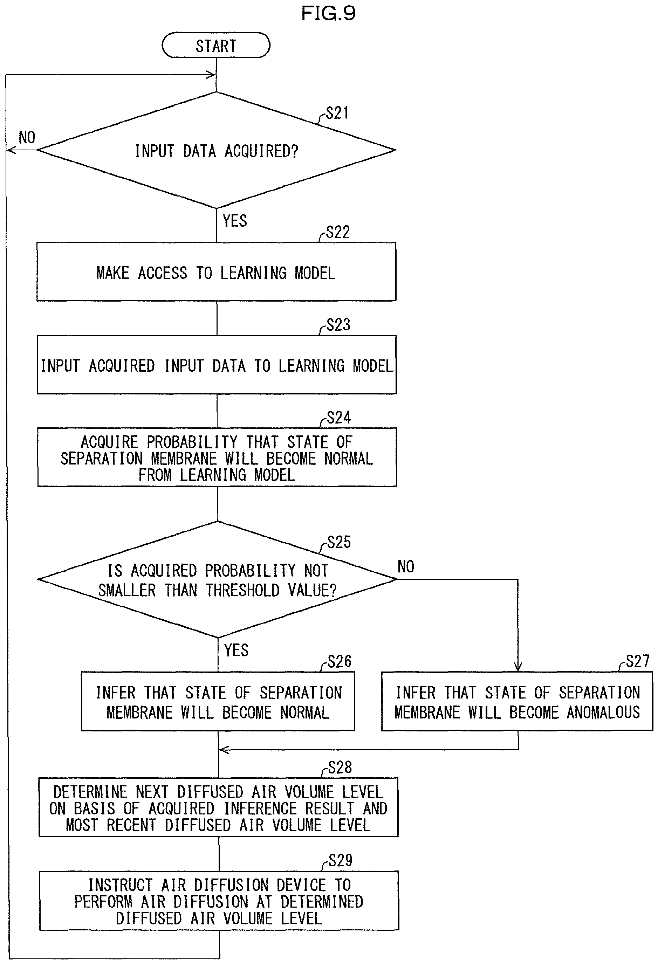

Fig. 9 is a flowchart showing an example of a flow of an inference process executed by the inference device 2 and a diffused air volume control process executed by the diffused air volume control device 8.

The input data acquisition section 21 is on standby until the input data acquisition section 21 acquires input data from the input data calculation device 5 (S21). When the input data acquisition section 21 acquires the input data (YES in S21), the input data acquisition section 21 outputs the input data to the access section 22.

When the access section 22 acquires the input data, the access section 22 makes access to the learning model 31 stored in the storage device 3 (S22). The inference section 23 included in the access section 22 inputs the input data to the learning model 31 (S23), and acquires, for example, a probability that the state of the separation membrane 93 will become normal from the learning model 31 (S24).

Then, the inference section 23 determines, as an example, whether or not the acquired probability value is not smaller than the threshold value (S25). In a case where the inference section 23 has determined that the acquired probability value is not smaller than the threshold value (YES in S25), the inference section 23 infers that the state of the separation membrane 93 will become normal (S26). In a case where the inference section 23 has determined that the acquired probability value is smaller than the threshold value (NO in S25), the inference section 23 infers that the state of the separation membrane 93 will become anomalous (S27). The inference section 23 outputs the inference result to the diffused air volume control device 8.

The diffused air volume control device 8 determines a next diffused air volume level on the basis of the acquired inference result and the most recent diffused air volume level (S28). Then, the diffused air volume control device 8 controls the air diffusion device 95 so that the air diffusion device 95 performs air diffusion at the determined diffused air volume level (S29). Then, the process returns to S21.

<Effect>

As described above, the learning model generation device 1 in accordance with Embodiment 1 includes the input data acquisition section 11 that acquires the input data derived from the operation data which is measured during the membrane filtration operation. Further, the learning model generation device 1 includes the learning section 13 that generates the learning model 31 for inferring the future state of the separation membrane 93 by means of machine learning using the input data as an input.

Further, the inference device 2 in accordance with Embodiment 1 includes the input data acquisition section 21 that acquires the input data derived from the operation data which has been measured during the membrane filtration operation. Further, the inference device 2 includes the access section 22 that makes access to the learning model 31. Further, the inference device 2 includes the inference section 23 that infers the future state of the separation membrane 93 from the input data with use of the learning model 31.

This allows the learning model generation device 1 to generate the learning model 31 that infers the state of the separation membrane 93, and also allows the inference device 2 to infer the state of the separation membrane 93 with use of the learning model 31. With the achievement of the inference of the state of the separation membrane 93, it is possible to control the diffused air volume on the basis of the inferred state of the separation membrane 93. Thus, it is possible to perform a stable membrane filtration operation while maintaining a normal state of the separation membrane 93 (for example, a state in which the possibility of the occurrence of a rapid increase in transmembrane pressure is reduced).

Further, the learning model generation device 1 includes the training data generation section 12 that generates the training data in which the input data and the label indicating the future state of the separation membrane 93 are associated with each other. The learning section 13 generates the learning model 31 by means of supervised learning using the training data. As a result, the learning model 31 is generated by means of supervised learning. This makes it possible to perform inference with a high degree of accuracy.

Further, the label includes the normality label and the anomaly label. As a result, in inferring the state of the separation membrane 93, it is possible to accurately infer whether the separation membrane 93 will become normal or anomalous with a high degree of accuracy. Therefore, it is possible to appropriately control the diffused air volume on the basis of the inference result so that the separation membrane 93 will become normal.

Further, the learning section 13 updates the learning model by means of machine learning using the input data used by the inference device 2 as an input. As a result, the learning model is updated with the input data used for the inference of the state of the separation membrane 93, so that it is possible to improve the inference accuracy of the learning model 31 each time the inference is performed.

Further, the input data acquisition section 21 acquires input data for each cycle of the membrane filtration operation consisting of the operation period and the pause period. Further, the inference section 23 infers the future state of the separation membrane 93 for each cycle. With this configuration, the future state of the separation membrane 93 is inferred for each cycle of the membrane filtration operation, so that a sudden change in the state of the separation membrane 93 can be quickly checked.

Further, the diffused air volume control device 8 determines the diffused air volume level in accordance with the state of the separation membrane 93 that has been inferred by the inference device 2, and controls the air diffusion device 95 so that the air diffusion device 95 performs air diffusion at the determined diffused air volume level. With this configuration, the diffused air volume level is automatically determined in accordance with the state of the separation membrane 93 that has been inferred. This eliminates the need for an operator who performs the membrane filtration operation to adjust the diffused air volume level. As a result, it is possible to reduce the workload of the operator.

The diffused air volume control device 8 determines a current diffused air volume level further in accordance with the diffused air volume level that has most recently been determined by the diffused air volume control device 8. This configuration makes it possible to determine a more appropriate diffused air volume level as compared to a configuration in which a most recent diffused air volume level is not taken into account.

The input data derived from the membrane filtration pressure includes at least one selected from the group consisting of the maximum membrane filtration pressure, the minimum membrane filtration pressure, the standard deviation value of the membrane filtration pressure, the average membrane filtration pressure, and the transmembrane pressure, which are in a certain cycle, and the fluctuation speed, the fluctuation amount, and the fluctuation rate, which are in P before that cycle. Further, the input data derived from the diffused air volume includes at least one selected from the group consisting of the average diffused air volume and the integrated diffused air volume in that cycle. Further, the operation data further includes the membrane filtration flow rate, and the input data derived from the membrane filtration flow rate includes at least one selected from the group consisting of the average membrane filtration flow rate and the integrated membrane filtration flow rate in that cycle. With these data, it is possible to improve the accuracy of the inference using the learning model 31.

### <Variation of Embodiment 1>

As described above, the labels are not limited to the following two types of labels: the normality label; and the anomaly label, and may include the label that indicates the "intermediate state between normality and anomaly" (hereinafter referred to as an "intermediate label"). The "intermediate state" means a state that cannot be said to be "normal" nor cannot be said to be "anomalous".

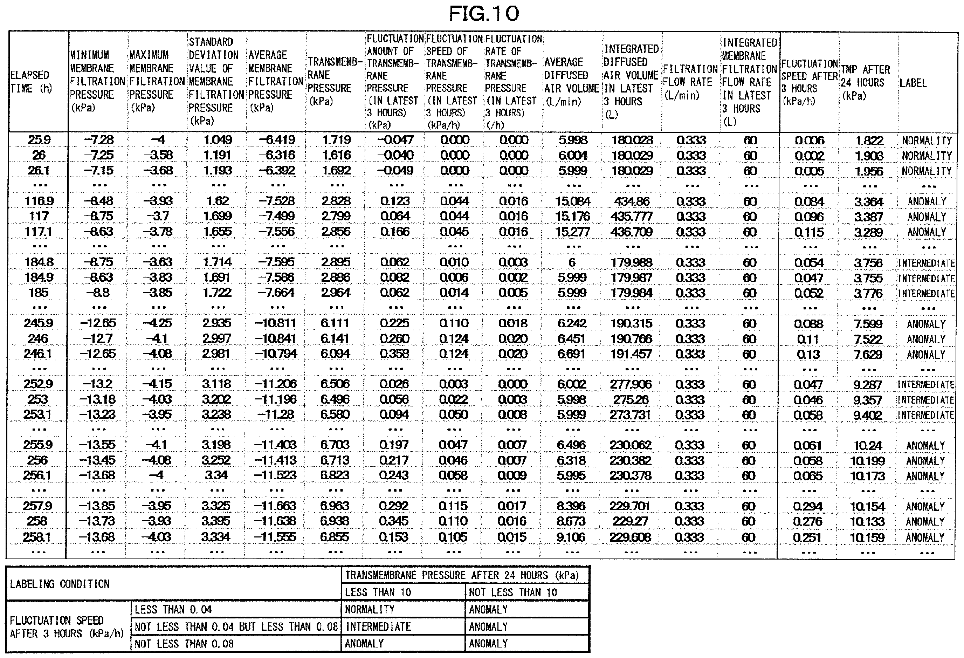

Fig. 10 is a view illustrating a specific example of training data. Pieces of data illustrated in Fig. 10 are identical to the pieces of data illustrated in Fig. 6. In the example illustrated in Fig. 10, the training data generation section 12 associates the normality label with input data in which the fluctuation speed after 3 hours is less than 0.04 kPa/h, and the transmembrane pressure after 24 hours is less than 10 kPa. Further, the training data generation section 12 associates the intermediate label with input data in which the fluctuation speed after 3 hours is not less than 0.04 kPa/h but less than 0.08 kPa, and the transmembrane pressure after 24 hours is less than 10 kPa. Further, the training data generation section 12 associates the anomaly label with input data in which the fluctuation speed after 3 hours is not less than 0.08 kPa/h, and the transmembrane pressure after 24 hours is less than 10 kPa. Further, the training data generation section 12 associates the anomaly label with input data in which the transmembrane pressure after 24 hours is not less than 10 kPa, regardless of the value of the fluctuation speed after 3 hours.

Further, the inference section 23 may be configured to infer any of "normality", "anomaly", and "intermediate state" as the state of the separation membrane 93. For example, in a case where the probability value is not smaller than a first threshold value, the inference section 23 infers that the state of the separation membrane 93 will become normal. Further, in a case where the probability value is smaller than the first threshold value and not smaller than a second threshold value, the inference section 23 infers that the state of the separation membrane 93 will become intermediate. Further, in a case where the probability value is smaller than the second threshold value, the inference section 23 infers that the state of the separation membrane 93 will become anomalous. The first threshold value is, but not limited to, for example, 70%, and the second threshold value is, but not limited to, for example, 40%. Further, in a case where the inference result is "intermediate state", the diffused air volume control device 8 may maintain a current diffused air volume level.

Further, the inference section 23 may be configured to output, to the diffused air volume control device 8, the probability value itself which has been outputted by the learning model 31 and which indicates that the separation membrane 93 will become normal. The diffused air volume control device 8 may determine, in accordance with the probability value, whether to increase or decrease the diffused air volume level and an increment of the diffused air volume level or a decrement thereof. For example, the diffused air volume control device 8 may be configured to, in a case where the probability is not lower than 50%, decrease the diffused air volume level and increase the decrement of the diffused air volume level with increase in probability value. Meanwhile, the diffused air volume control device 8 may be configured to, in a case where the probability is lower than 50%, increase the diffused air volume level and increase the increment of the diffused air volume level with decrease in probability value.

### [Embodiment 2]

The following will describe another embodiment of the present invention. For convenience of description, members having functions identical to those described in Embodiment 1 are assigned identical referential numerals, and their descriptions are omitted here.

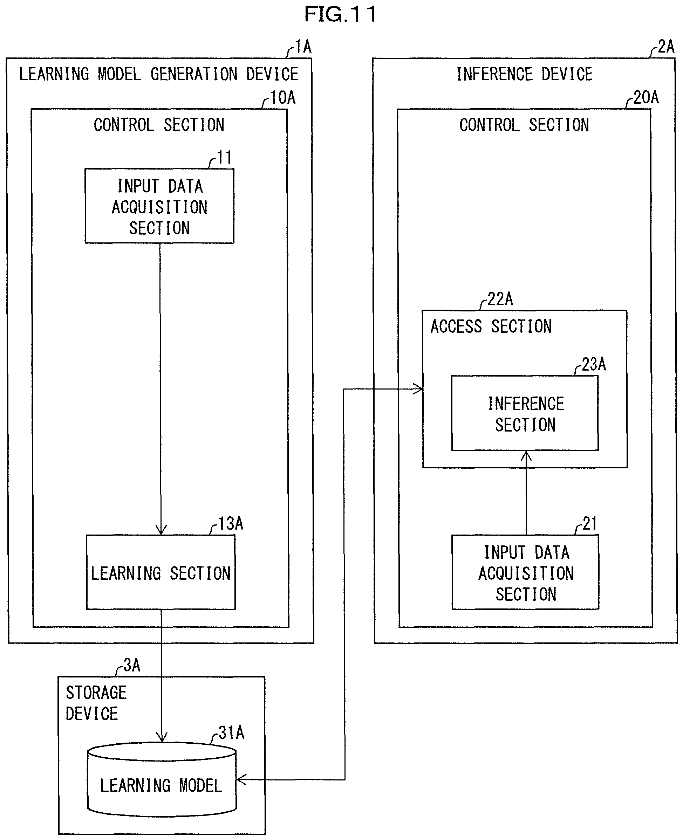

Fig. 11 is a block diagram illustrating an example of configurations of main parts of a learning model generation device 1A and an inference device 2A in accordance with Embodiment 2.

In Embodiment 1, the learning model generation device 1 performs the so-called supervised learning to generate the learning model 31. Meanwhile, the learning model generation device 1A in accordance with Embodiment 2 performs unsupervised learning to generate a learning model 31A.

### <Configuration of main part of learning model generation device 1A>

With regard to the members having the same names as the members provided in the learning model generation device 1, only differences will be described below. The learning model generation device 1A includes a control section 10A. The control section 10A includes an input data acquisition section 11 and a learning section 13A.

The learning section 13A generates the learning model 31A by means of unsupervised learning with use of input data having been acquired from the input data acquisition section 11. Specifically, the learning section 13A sets a boundary for dividing the distribution of the input data to generate, as a learning result, a cluster into which input data indicating that the state of the separation membrane 93 will become normal is classified (hereinafter referred to as "normality cluster") and a cluster into which input data indicating that the state of the separation membrane 93 will become anomalous is classified (hereinafter referred to as "anomaly cluster"). Then, the generated clusters are stored as the learning model 31A in a storage device 3A.

In the unsupervised learning, the learning section 13A learns a large amount of unlabeled input data to thereby learn how the input data is distributed. As an algorithm for cluster analysis, for example, a known algorithm such as K-means may be used.

### <Configuration of main part of inference device 2A>

With regard to the members having the same names as the members provided in the inference device 2, only differences will be described below. The inference device 2A includes a control section 20A. The control section 20A includes an input data acquisition section 21 and an access section 22A. The access section 22A makes access to the learning model 31A stored in the storage device 3A. The access section 22A includes an inference section 23A.

The inference section 23A inputs, to the learning model 31A to which the access section 22A has made access, the input data acquired by the input data acquisition section 21. Then, the inference section 23A acquires, as an output value outputted from the learning model 31A, either "normality", which indicates that the input data belongs to the normality cluster, or "anomaly", which indicates that the input data belongs to the anomaly cluster. The inference section 23A outputs the acquired output value to the diffused air volume control device 8.

In a case where the acquired output value is "normality", the diffused air volume control device 8 decreases the diffused air volume level. In a case where the acquired output value is "anomaly", the diffused air volume control device 8 increases the diffused air volume level.

### <Flow of learning model generation process>

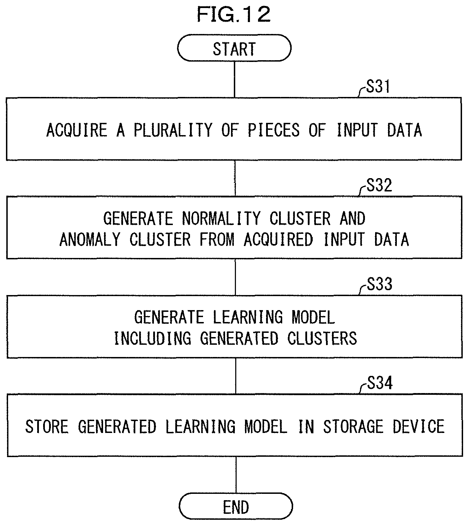

Fig. 12 is a flowchart showing an example of a flow of a learning model generation process executed by the learning model generation device 1A. Note that the learning model generation process shown in Fig. 12 is a process of newly generating a learning model 31A.

The input data acquisition section 11 acquires a plurality of pieces of input data from the input data calculation device 5 or the storage device 7 (S31). The input data acquisition section 11 outputs the plurality of pieces of input data thus acquired to the learning section 13A.

The learning section 13A sets the boundary for the distribution of the acquired input data to generate the normality cluster and the anomaly cluster (S32). Then, the learning section 13A generates the learning model 31A including these clusters (S33), and stores the learning model 31A in the storage device 3A (S34). Note that the learning section 13 also stores the acquired training data in the storage device 3A. This is the end of the learning model generation process.

Although not shown in any of the drawings, a learning model update process executed by the learning model generation device 1A will be described below.

When the input data acquisition section 11 acquires the input data from the input data calculation device 5, the input data acquisition section 11 outputs the input data to the learning section 13A. The learning section 13A newly sets a boundary for dividing a distribution consisting of the acquired input data and the input data stored in the storage device 3A, to thereby update the normality cluster and the anomaly cluster. Then, the learning section 13A generates another learning model 31A including the updated clusters, and overwrites the learning model 31A stored in the storage device 3A with the learning model 31A thus generated.

### <Flow of inference process and diffused air volume control process>

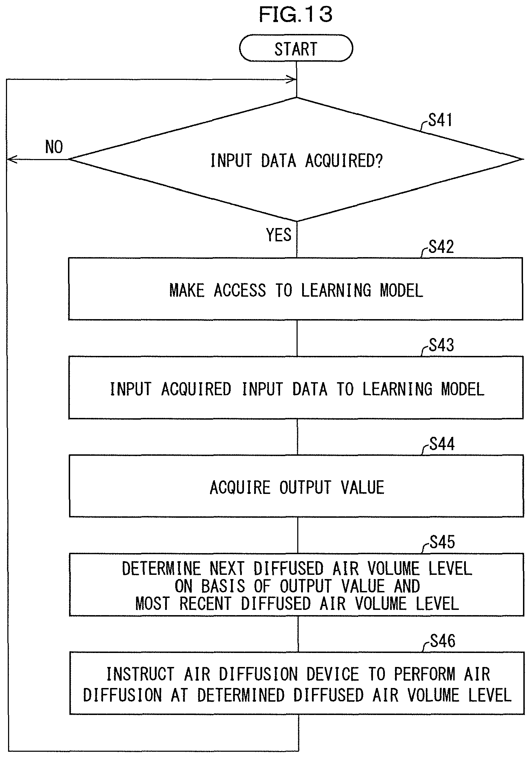

Fig. 13 is a flowchart showing an example of a flow of an inference process executed by the inference device 2A and a diffused air volume control process executed by the diffused air volume control device 8.

The input data acquisition section 21 is on standby until the input data acquisition section 21 acquires the input data from the input data calculation device 5 (S41). When the input data acquisition section 21 acquires the input data (YES in S41), the input data acquisition section 21 outputs the input data to the access section 22A.

When the access section 22A acquires the input data, the access section 22A makes access to the learning model 31A stored in the storage device 3A (S42). The inference section 23A inputs, to the learning model 31A to which the access section 22A has made access, the input data acquired by the input data acquisition section 21 (S43), and acquires "normality" or "anomaly", which is an output value outputted from the learning model 31A (S44). The inference section 23A outputs the acquired output value to the diffused air volume control device 8.

The diffused air volume control device 8 determines a next diffused air volume level on the basis of the acquired output value and a most recent diffused air volume level (S45). Then, the diffused air volume control device 8 controls the air diffusion device 95 so that the air diffusion device 95 performs air diffusion at the determined diffused air volume level (S46). Then, the process returns to S41.

### <Effect>

According to the learning model generation device 1A in accordance with Embodiment 2, the learning section 13A generates, as a learning result, the learning model 31A including the normality cluster and the anomaly cluster by means of unsupervised learning. This makes it possible to easily generate the learning model even in a situation where sufficient training data cannot be prepared. Thus, the learning performed by the learning model generation device 1A and the inference performed by the inference device 2A can be executed as an alternative to the learning performed by the learning model generation device 1 and the inference performed by the inference device 2 or as a process that precedes the learning performed by the learning model generation device 1 and the inference performed by the inference device 2.

### <Example of outlier detection>

The learning model 31A may generate only the normality cluster as a learning result and perform the so-called outlier detection. In the case of this example, the learning model 31A identifies a distance between the inputted input data and a representative point (for example, a center of mass) in the normality cluster. Then, in a case where the distance is not less than a predetermined value, the learning model 31A outputs that the input data is an outlier. In a case where the distance is less than the predetermined value, the learning model 31A outputs that the input data is a normal value (not an outlier). Then, when the outlier has been outputted, the inference section 23A infers that the state of the separation membrane 93 will become anomalous, and when the normal value has been outputted, the inference section 23A infers that the state of the separation membrane 93 will become normal. Note that, as an outlier detection algorithm, a local outlier factor (LOF) method, a one-class support vector machine (OC-SVM), or the like may be used.

### [Reference Embodiment]

Reference Embodiment of the present invention will be described below. For convenience of description, members having functions identical to those described in Embodiments 1 and 2 are assigned identical referential numerals, and their descriptions are omitted here.

The present reference embodiment performs a simulation that repeats long-term inference based on regression analysis while changing parameters, for the purpose of optimizing an operation cost of the membrane filtration operation. The operation cost includes the cost of energy required for air diffusion performed by the air diffusion device 95 (hereinafter referred to as "energy cost") and the cost of chemically washing the contaminated separation membrane 93 (hereinafter referred to as "chemical washing cost"). The chemical washing cost includes a purchase cost of a chemical(s) used for the chemical washing and a labor cost of an operator who performs the chemical washing.

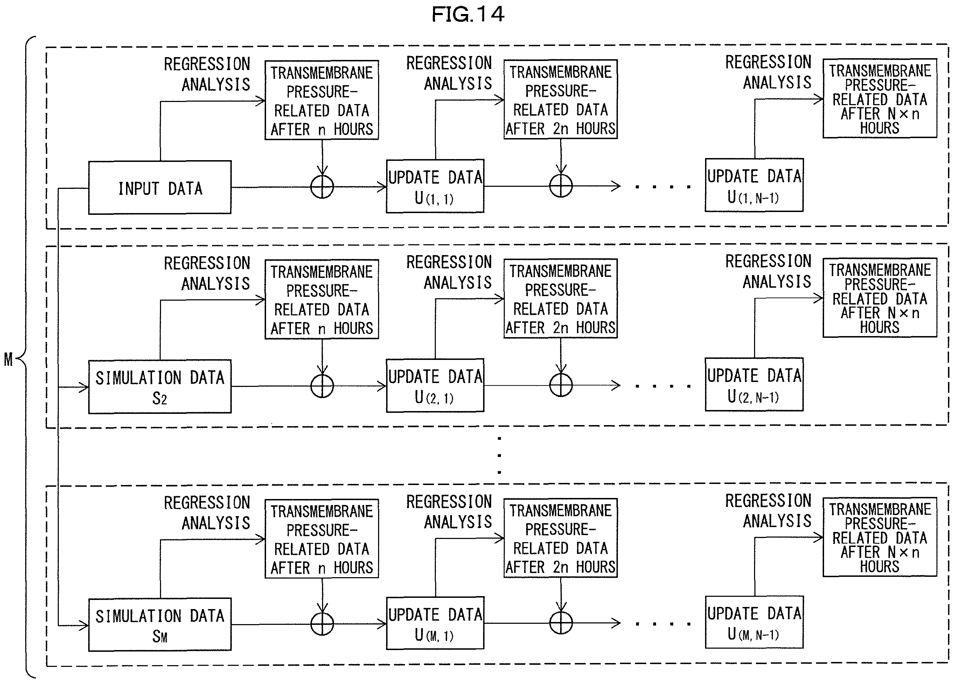

[Processing 1] First, the long-term inference based on regression analysis of the present reference embodiment will be outlined with reference to Fig. 14. The regression analysis of the present reference embodiment uses, as an explanatory variable, the input data acquired from the input data calculation device 5 or the storage device 7, and uses, as an objective variable, data related to the transmembrane pressure of the separation membrane 93 after a predetermined n hours (where n is a positive integer) from a time which has been associated with the input data (hereinafter referred to as "transmembrane pressure-related data"). The transmembrane pressure-related data is, as an example, data on at least one selected from the group consisting of the transmembrane pressure itself, the fluctuation speed of the transmembrane pressure, the fluctuation amount of the transmembrane pressure, and the fluctuation rate of the transmembrane pressure, which have been described in Embodiment 1. Based on this regression analysis, a process of inferring the transmembrane pressure after n hours during which a current value of the diffused air volume is maintained is executed. Then, data in which the transmembrane pressure-related data in the input data has been updated with use of the inferred transmembrane pressure-related data after n hours (hereinafter referred to as "update data") is generated, and regression analysis is performed again on the update data. This process is iterated N times (where N is an integer of not less than 2). In other words, a process of "inferring the transmembrane pressure-related data after n hours through regression analysis, and updating the input data by changing the transmembrane pressure-related data included in the input data to the transmembrane pressure-related data after n hours" is executed N times.

Specifically, on the first iteration, the transmembrane pressure-related data after n hours from the time associated with the input data is inferred through regression analysis using the input data as an explanatory variable, and then, update data U_{(1,1)} is generated in which the transmembrane pressure-related data in the input data has been updated with use of the inferred transmembrane pressure-related data.

On the Xth iteration (where X is an integer of not less than 2 and less than N), the transmembrane pressure-related data after X×n hours from the time associated with the input data is inferred through regression analysis using the update data U_{(1,X-1)} as an explanatory variable, and then, update data U_{(1,X)} is generated in which the transmembrane pressure-related data in the update data U_{(1,X-1)} has been updated with use of the inferred transmembrane pressure-related data.

On the Nth iteration, the transmembrane pressure-related data after N×n hours from the time associated with the input data is inferred through regression analysis using the update data U_{(1,N-1)} as an explanatory variable. Update data U_{(1,N)} may be generated in which the transmembrane pressure-related data in the update data U_{(1,N-1)} has been updated with use of the inferred transmembrane pressure-related data.

As described above, a total of N transmembrane pressures after n hours, after 2n hours, ..., and after N×n hours from the time associated with the input data are inferred. As described above, the changes over time in the transmembrane pressure in a period up to N×n hours during which the current value of the diffused air volume is maintained are inferred.

[Processing 2] Next, in the present reference embodiment, the above-described processing 1 is performed with use of data in which data related to the diffused air volume (part of the data; hereinafter referred to as "diffused air volume-related data") in the input data has been changed (hereinafter referred to as "simulation data"). The diffused air volume-related data is, as an example, at least one selected from the group consisting of the average value of the diffused air volume and the integrated value of the diffused air volume, which have been described in Embodiments 1 and 2. This process is executed M times (where M is an integer of not less than 2) while the diffused air volume-related data is changed. That is, the processing 1 is executed on M pieces of data (input data and M-1 pieces of simulation data) which differ from each other. That is, in the processing 2, the above-described processing 1 is executed M times while changing part of the data included in the input data, to thereby acquire M inference results on the changes over time in the transmembrane pressure in a period up to N×n hours.

The processing on the first iteration out of M iterations is the above-described processing 1 executed on the input data, and specifics of the processing are as described above.

As the processing on the Yth iteration out of the M iterations (where Y is an integer of not less than 2 and not more than M), the above-described processing 1 is executed on the simulation data S_{Y} in which the diffused air volume-related data in the input data is changed. Specifically, on the first iteration of the processing 1, the transmembrane pressure-related data after n hours from the time associated with the simulation data S_{Y} is inferred through regression analysis using the simulation data S_{Y} as an explanatory variable, and then, update data U_{(Y,1)} is generated in which the transmembrane pressure-related data in the simulation data S_{Y} has been updated with use of the inferred transmembrane pressure-related data. On the Xth iteration of the processing 1, the transmembrane pressure-related data after X×n hours from the time associated with the simulation data S_{Y} is inferred through regression analysis using the update data U_{(Y,X-1)} as an explanatory variable, and then, update data U_{(Y,X)} is generated in which the transmembrane pressure-related data in the update data U_{(Y,X-1)} has been updated with use of the inferred transmembrane pressure-related data. On the Nth iteration of the processing 1, the transmembrane pressure-related data after N×n hours from the time associated with the simulation data S_{Y} is inferred through regression analysis using the update data U_{(Y,N-1)} as an explanatory variable.

By executing the above-described processing 1 and processing 2, it is possible to infer, with respect to each of the M diffused air volumes, changes over time in the transmembrane pressure in a period up to N×n hours during which the current value of the diffused air volume is maintained. From these M inference results, the timing of chemical washing and the diffused air volume are determined to obtain an appropriate operation cost.

In view of the fact that a situation occurs where a total operation cost cannot necessarily be reduced simply by continuing to curb an increase in the transmembrane pressure in the late stage of the membrane filtration operation in which fouling has progressed, the present reference embodiment intends to control the diffused air volume with the aim of avoiding long-term life extension of the separation membrane 93 and optimizing the total operation cost.

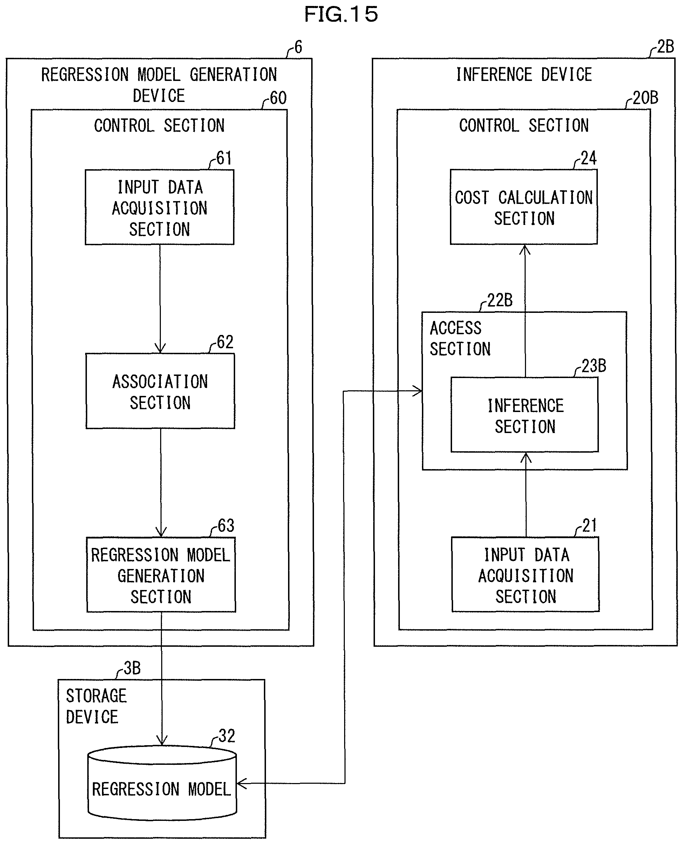

Fig. 15 is a block diagram illustrating an example of configurations of main parts of a regression model generation device 6 and an inference device 2B in accordance with the present reference embodiment.

### <Configuration of main part of regression model generation device 6>

The regression model generation device 6 includes a control section 60. The control section 60 includes an input data acquisition section 61, an association section 62, and a regression model generation section 63.

The input data acquisition section 61 acquires input data from the input data calculation device 5 or the storage device 7, and outputs the acquired input data to the association section 62.

The association section 62 associates, with each piece of the input data, the transmembrane pressure-related data after n hours from the time associated with the input data. The value of n is, for example, 12 or 24, but is not limited to this example.

The association section 62 outputs, to the regression model generation section 63, the input data with which the transmembrane pressure-related data after n hours has been associated. Note that input data with which no transmembrane pressure-related data has been associated because any transmembrane pressure-related data after n hours has not yet existed may be retained in the association section 62 until the transmembrane pressure-related data can be acquired.

The regression model generation section 63 generates a regression model 32 that uses the input data as an explanatory variable and uses the transmembrane pressure-related data after n hours as an objective variable, and then stores the regression model 32 in the storage device 3B.

### <Configuration of main part of inference device 2B>

With regard to the members having the same names as the members provided in the inference device 2, only differences will be described below. The inference device 2B includes a control section 20B. The control section 20B includes the input data acquisition section 21, an access section 22B, and a cost calculation section 24.

The access section 22B makes access to the regression model 32 stored in the storage device 3B. The access section 22B includes an inference section 23B. The inference section 23B first executes the above-described processing 1. Specifically, the inference section 23B inputs, to the regression model 32 to which the access section 22B has made access, the input data acquired by the input data acquisition section 21, to thereby acquire transmembrane pressure-related data after n hours from the regression model 32. Subsequently, the inference section 23B inputs, to the regression model 32, update data obtained by updating the input data with use of the acquired transmembrane pressure-related data after n hours, to thereby acquire transmembrane pressure-related data after 2n hours from the regression model 32. This process is iterated N times to acquire the transmembrane pressure-related data in a period up to N×n hours.

Then, the inference section 23B executes the above-described processing 2. Specifically, with regard to the input data and the simulation data, the inference section 23B performs inference with use of the regression model through the above-described processing 1, to acquire transmembrane pressure-related data in a period up to N×n hours for each data. This allows the inference section 23B to obtain M inference results on the changes over time in the transmembrane pressure in a period up to N×n hours.

Then, the inference section 23B outputs, to the cost calculation section 24, the changes over time in the transmembrane pressure in a period up to N×n hours inferred on the basis of (A) the input data, (B) the changes over time in the transmembrane pressure in a period up to N×n hours inferred on the basis of the input data, (C) the simulation data S₂ to S_{M}, and (D) each piece of the simulation data S₂ to S_{M}. Note that the data (C) and (D) above are each M-1 pieces of data.

The cost calculation section 24 calculates an estimated cost of the membrane filtration operation on the basis of the changes over time inferred by the inference section 23B. Specifically, the cost calculation section 24 calculates the energy cost from the input data acquired from the inference section 23B and the diffused air volume-related data of the simulation data. Further, the cost calculation section 24 identifies a chemical washing timing from the changes over time in the transmembrane pressure acquired from the inference section 23B. The chemical washing timing may be, for example, a time point when a rapid increase in the transmembrane pressure (TMP jump) has occurred. Then, the cost calculation section 24 calculates the chemical washing cost on the basis of the identified number of chemical washing timings.

Further, the cost calculation section 24 identifies an appropriate combination of the energy cost and the chemical washing cost on the basis of the combination of the calculated energy cost and the calculated chemical washing cost. The cost calculation section 24 refers to, for example, a preset energy cost condition and a preset chemical washing cost condition, and identifies a combination that is closest to these conditions. The cost calculation section 24 outputs, to the diffused air volume control device 8, diffused air volume-related data corresponding to the identified combination.

The diffused air volume control device 8 of the present reference embodiment determines a diffused air volume level on the basis of the diffused air volume-related data acquired from the cost calculation section 24, and controls the air diffusion device 95 so that the air diffusion device 95 performs air diffusion at the determined diffused air volume level.

### <Flow of inference process and diffused air volume control process>

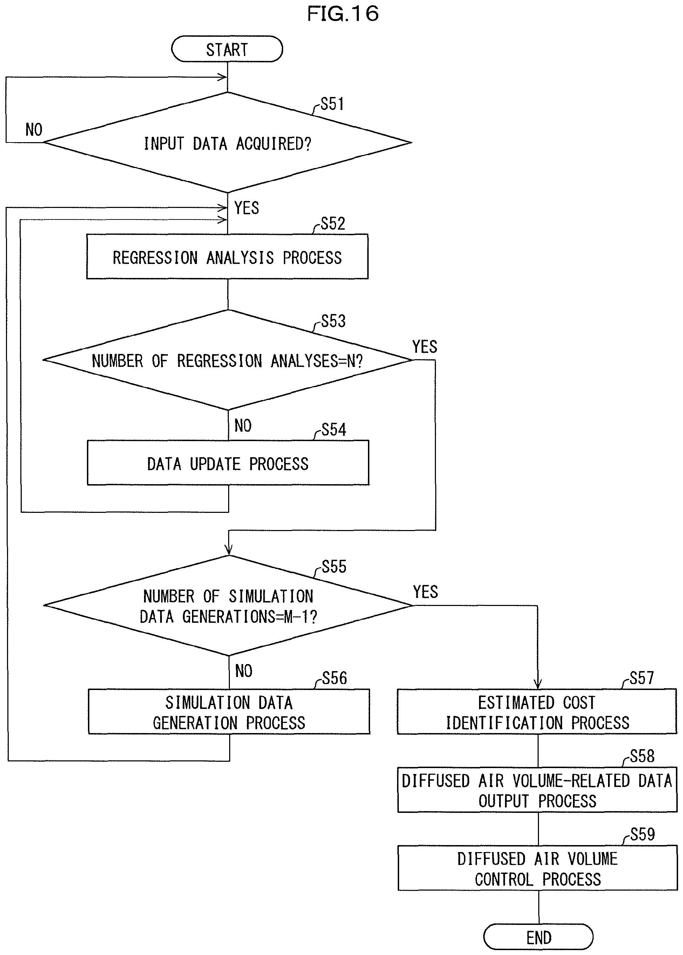

Fig. 16 is a flowchart showing an example of a flow of an inference process executed by the inference device 2B and a diffused air volume control process executed by the diffused air volume control device 8.

The input data acquisition section 21 is on standby until the input data acquisition section 21 acquires input data from the input data calculation device 5 (S51). When the input data acquisition section 21 acquires the input data (YES in S51), the input data acquisition section 21 outputs the input data to the access section 22B.

When the access section 22B acquires the input data, the access section 22B makes access to the regression model 32 stored in the storage device 3B. Subsequently, the inference section 23B executes a regression analysis process (S52). Specifically, the inference section 23B inputs, to the regression model 32 to which the access section 22B has made access, the input data acquired by the input data acquisition section 21, to thereby acquire transmembrane pressure-related data after n hours from the regression model 32.

Subsequently, the inference section 23B determines whether or not the number of regression analyses, which is the number of times the regression analysis process has been executed, has reached N times (S53). In a case where the number of regression analyses has not reached N times (NO in S53), the inference section 23B executes a data update process (S54). Specifically, the inference section 23B generates update data in which the transmembrane pressure-related data in the input data has been updated with use of the acquired transmembrane pressure-related data after n hours. Then, the inference section 23B executes the process in S52 again with use of the update data. Note that an object which will be subjected to the execution of the process in S52 for the subsequent times is update data having been generated in the most recent process in S54. That is, the inference section 23B inputs the generated update data to the regression model 32. The inference section 23B repeats the execution of the process in S54 and the subsequent process in S52 until it is determined in the process in S53 that the number of regression analyses has reached N times. When the number of regression analyses has reached N times, the inference section 23B acquires, with respect to the input data, the transmembrane pressure-related data in a period up to N×n hours during which the current value of the diffused air volume is maintained.

In a case where the number of regression analyses has reached N times (YES in S53), the inference section 23B determines whether or not the number of simulation data generations has reached M-1 times (S55). Note that since the number of simulation data generations is 0 times at the first move to S55, the inference section 23B determines that the number of simulation data generations has not reached M-1 times.

In a case where the number of simulation data generations has not reached M-1 times (NO in S55), the inference section 23B executes a simulation data generation process (S56). Specifically, the inference section 23B changes the diffused air volume-related data in the input data to generate simulation data. Then, the inference section 23B executes the processes in S52 to S54 on the generated simulation data. As a result, the inference section 23B acquires, with respect to the generated simulation data, the transmembrane pressure-related data in a period up to N×n hours during which the current value of the diffused air volume is maintained. Further, the inference section 23B repeats the execution of the process in S56 and the subsequent processes in S52 to S54 until it is determined in the process in S55 that the number of simulation data generations has reached M-1 times. When the number of simulation data generations has reached M-1 times, the inference section 23B acquires M pieces of transmembrane pressure-related data in a period up to N×n hours.

In a case where the number of simulation data generations has reached M-1 times (YES in S55), the inference section 23B generates changes over time in the transmembrane pressure from each piece of the transmembrane pressure-related data in a period up to N×n hours. Then, the inference section 23B outputs, to the cost calculation section 24, the changes over time in the transmembrane pressure in a period up to N×n hours inferred on the basis of (A) the input data, (B) the changes over time in the transmembrane pressure in a period up to N×n hours inferred on the basis of the input data, (C) the simulation data S₂ to S_{M}, and (D) each piece of the simulation data S₂ to S_{M}.

Subsequently, the cost calculation section 24 executes an estimated cost identification process (S57). Specifically, the cost calculation section 24 calculates the energy cost from the input data acquired from the inference section 23B and the diffused air volume-related data of the simulation data. Further, the cost calculation section 24 identifies a chemical washing timing from the changes over time in the transmembrane pressure acquired from the inference section 23B. Then, the cost calculation section 24 calculates the chemical washing cost on the basis of the identified number of chemical washing timings. Further, the cost calculation section 24 identifies an appropriate combination of the energy cost and the chemical washing cost on the basis of the combination of the calculated energy cost and the calculated chemical washing cost. The cost calculation section 24 refers to, for example, a preset energy cost condition and a preset chemical washing cost condition, and identifies a combination that is closest to these conditions.

Subsequently, the cost calculation section 24 executes a diffused air volume-related data output process (S58). Specifically, the cost calculation section 24 identifies input data or simulation data corresponding to the optimum combination identified in the estimated cost identification process. Then, the cost calculation section 24 outputs, to the diffused air volume control device 8, diffused air volume-related data of the identified input data or simulation data.

Subsequently, the diffused air volume control device 8 executes a diffused air volume control process (S59). Specifically, the diffused air volume control device 8 determines a diffused air volume level on the basis of the diffused air volume-related data acquired from the cost calculation section 24, and controls the air diffusion device 95 so that the air diffusion device 95 performs air diffusion at the determined diffused air volume level.

### <Effect>

There may be cases where performing a membrane filtration operation while maintaining a state in which the possibility of the occurrence of a sudden increase in the transmembrane pressure is reduced does not lead to cost reduction or energy conservation. To address this problem, according to the inference device 2B in accordance with the present reference embodiment, it is possible to identify an operation condition of the air diffusion device 95 that achieves an appropriate energy cost for air diffusion and an appropriate chemical washing cost. For example, performing chemical washing at an appropriate timing enables reduction of the energy cost required for air diffusion, and, as a result, it is possible to reduce the operation cost. That is, according to the inference device 2B, it is possible to optimize the total cost of the membrane filtration operation.

### <Variation>

In the above description, in changing the input data to generate the simulation data S₂ to S_{M}, it is assumed that the data to be changed is the diffused air volume-related data. However, the data to be changed is not limited to the diffused air volume-related data and can be any input data that can be controlled. For example, in a case where the membrane filtration flow rate in the membrane filtration operation can be controlled, the average membrane filtration flow rate and the integrated membrane filtration flow rate may be changed.

The cost calculation section 24 may select the operation cost in accordance with the operator's operation for the membrane filtration operation. In other words, such a configuration that the operator can specify an appropriate operation cost index may be employed.

In the flowchart shown in Fig. 16, a nest structure of repetitive processing is not limited to this example. That is, in Fig. 16, the regression analysis process is executed in an inner loop, and the simulation data generation process is executed in an outer loop. Instead, such a configuration that the simulation data generation process is executed in the inner loop, and the regression analysis process is executed in the outer loop may be employed.

### [Common variations shared by Embodiments and Reference Embodiment]

The input data may include at least one selected from the group consisting of the followings: the maximum membrane filtration pressure; the minimum membrane filtration pressure; the standard deviation value of the membrane filtration pressure; the average membrane filtration pressure; the transmembrane pressure; the fluctuation speed of the transmembrane pressure; the fluctuation amount of the transmembrane pressure; and the fluctuation rate of the transmembrane pressure, all of which are calculated from the membrane filtration pressure. Further, the input data may include at least one selected from the group consisting of the average diffused air volume and the integrated diffused air volume, which are calculated from the diffused air volume.

The input data may include data other than the data shown in Fig. 4. For example, the input data may include data on the water 92 to be treated. Examples of the data on the water 92 to be treated include, but not limited to, an average water temperature, a viscosity, an organic substance concentration (such as an organic substance concentration of drained water, a total organic carbon concentration, and UV260), pH, a sludge concentration (MLSS), a suspended solid (SS), a dissolved oxygen concentration (DO), an oxidation reduction potential (ORP), an concentration of ammonium ions, and a concentration of nitrate ions. The input data may also include: a membrane filtration resistance value obtained by dividing the membrane filtration pressure by the membrane filtration flow rate; and a fluctuation value of the membrane filtration resistance value.

The inference devices 2, 2A, 2B may also have the function of the diffused air volume control device 8. In this case, the diffused air volume control device 8 is unnecessary.

The state inference system 100 may have a function of notifying an operation manager of the inference results from the inference devices 2, 2A, 2B. This makes it possible to assist in a stable operation of the membrane filtration operation.

The learning models 31, 31A and the regression model 32 may be stored in storage sections (not illustrated) of the inference devices 2, 2A, 2B.

The learning model generation devices 1, 1A, and the regression model generation device 6 may acquire input data from the inference devices 2, 2A, 2B in the learning model update process or the regression model update process.

With regard to a combination of the learning model generation device 1 and the inference device 2, a combination of the learning model generation device 1A and the inference device 2A, and a combination of the regression model generation device 6 and the inference device 2B, the devices in each of the combinations may be configured to serve as separate bodies or separate systems and to be connected communicably or may be integrated or configured to serve as one system.

### [Software implementation example]

Control blocks (control sections 10, 10A, 20, 20A, 20B, 60) of the learning model generation devices 1, 1A, the inference devices 2, 2A, 2B, and the regression model generation device 6 can be realized by a logic circuit (hardware) provided in an integrated circuit (IC chip) or the like or can be alternatively realized by software.

In the latter case, the learning model generation devices 1, 1A, the inference devices 2, 2A, 2B, and the regression model generation device 6 each include a computer that executes instructions of a program that is software realizing the foregoing functions. The computer includes, for example, at least one processor and a computer-readable storage medium storing the program. An object of the present invention can be achieved by the processor of the computer reading and executing the program stored in the storage medium. Examples of the processor encompass a central processing unit (CPU). Examples of the storage medium encompass a "non-transitory tangible medium" such as a read only memory (ROM), a tape, a disk, a card, a semiconductor memory, and a programmable logic circuit. The computer may further include a random access memory (RAM) or the like in which the program is loaded. Further, the program may be made available to the computer via any transmission medium (such as a communication network and a broadcast wave) which allows the program to be transmitted. Note that an aspect of the present invention can also be achieved in the form of a computer data signal in which the program is embodied via electronic transmission and which is embedded in a carrier wave.

The present invention is not limited to the embodiments, but can be altered by a skilled person in the art within the scope of the claims. The present invention also encompasses, in its technical scope, any embodiment derived by combining technical means disclosed in differing embodiments.

### Reference Signs List

1, 1A: learning model generation device
2, 2A: inference device
8: diffused air volume control device
11: input data acquisition section
12: training data generation section
13, 13A: learning section
21: input data acquisition section
22, 22A: access section
23, 23A: inference section
31, 31A: learning model
90: membrane separation device
92: water to be treated
93: separation membrane
95: air diffusion device

## Claims

1. A learning model generation device comprising:
an input data acquisition section configured to acquire input data derived from operation data that is measured during a membrane filtration operation which is carried out by a membrane separation device, the operation data including a membrane filtration pressure and a diffused air volume, the membrane separation device comprising: a separation membrane disposed so as to be immersed in a water to be treated; and an air diffusion device configured to perform air diffusion through a membrane surface of the separation membrane, the membrane separation device being configured to obtain a treated water that has passed through the separation membrane while causing the air diffusion device to perform the air diffusion; and
a learning section configured to generate a learning model for inferring a state of the separation membrane, by means of machine learning using the acquired input data as an input.

2. The learning model generation device according to claim 1, wherein:
the membrane filtration operation is an intermittent operation;
the input data derived from the membrane filtration pressure includes at least one selected from the group consisting of a maximum value of the membrane filtration pressure, a minimum value of the membrane filtration pressure, a standard deviation value of the membrane filtration pressure, an average value of the membrane filtration pressure, and a transmembrane pressure, which are in a unit period consisting of an operation period and a pause period that follows the operation period, and a fluctuation speed of the transmembrane pressure, a fluctuation amount of the transmembrane pressure, and a fluctuation rate of the transmembrane pressure, which are in a predetermined period before the unit period; and
the input data derived from the diffused air volume includes at least one selected from the group consisting of an average value of the diffused air volume in the unit period and an integrated value of the diffused air volume in the predetermined period.

3. The learning model generation device according to claim 1 or 2, wherein
the operation data further includes a membrane filtration flow rate that is measured during the membrane filtration operation.

4. The learning model generation device according to claim 3, wherein:
the membrane filtration operation is an intermittent operation; and
the input data derived from the membrane filtration flow rate includes at least one selected from the group consisting of an average value of the membrane filtration flow rate in a unit period consisting of an operation period and a pause period that follows the operation period, and an integrated value of the membrane filtration flow rate in a predetermined period before the unit period.

5. The learning model generation device according to any one of claims 1 to 4, further comprising:
a training data generation section configured to generate training data in which the input data and a label indicating the state of the separation membrane with respect to the input data are associated with each other, wherein
the learning section generates the learning model by means of supervised learning using the generated training data.

6. The learning model generation device according to claim 5, wherein
the label includes a normality label, which is associated with the input data in a case where the input data indicates that the state of the separation membrane will become normal, and an anomaly label, which is associated with the input data in a case where the input data indicates that the state of the separation membrane will become anomalous.

7. The learning model generation device according to claim 6, wherein
the label further includes an intermediate label which is associated with the input data in a case where the input data indicates that the state of the separation membrane will become an intermedia state between normality and anomaly.

8. The learning model generation device according to any one of claims 1 to 4, wherein
the learning section generates, by means of unsupervised learning, the learning model which includes clusters as a learning result.

9. The learning model generation device according to any one of claims 1 to 8, wherein
the learning section acquires data inputted to the learning model when the state of the separation membrane is inferred with use of the learning model, and updates the learning model by means of machine learning using the acquired data as an input.

10. An inference device comprising:
an access section configured to make access to a learning model generated by means of machine learning on the basis of operation data that is measured during a membrane filtration operation which is carried out by a membrane separation device, the operation data including a membrane filtration pressure and a diffused air volume, the membrane separation device comprising: a separation membrane disposed so as to be immersed in a water to be treated; and an air diffusion device configured to perform air diffusion through a membrane surface of the separation membrane, the membrane separation device being configured to obtain a treated water that has passed through the separation membrane while causing the air diffusion device to perform the air diffusion, the learning model being a learning model for inferring the state of the separation membrane;
an input data acquisition section configured to acquire input data derived from the operation data that is measured during the membrane filtration operation; and
an inference section configured to infer the state of the separation membrane from the acquired input data with use of the learning model to which the access is made.

11. The inference device according to claim 10, wherein:
the membrane filtration operation is an intermittent operation;
the input data acquisition section acquires the input data derived from the operation data at intervals of a unit period consisting of an operation period and a pause period that follows the operation period; and
the inference section infers the state of the separation membrane from the acquired input data at the intervals of the unit period.

12. The inference device according to claim 10 or 11, wherein:
the membrane filtration operation is an intermittent operation;
the input data derived from the membrane filtration pressure includes at least one selected from the group consisting of a maximum value of the membrane filtration pressure, a minimum value of the membrane filtration pressure, a standard deviation value of the membrane filtration pressure, an average value of the membrane filtration pressure, and a transmembrane pressure, which are in a unit period consisting of an operation period and a pause period that follows the operation period, and a fluctuation speed of the transmembrane pressure, a fluctuation amount of the transmembrane pressure, and a fluctuation rate of the transmembrane pressure, which are in a predetermined period before the unit period; and
the input data derived from the diffused air volume includes at least one selected from the group consisting of an average value of the diffused air volume in the unit period and an integrated value of the diffused air volume in the predetermined period.

13. The inference device according to any one of claims 10 to 12, wherein
the operation data further includes a membrane filtration flow rate that is measured during the membrane filtration operation.

14. The inference device according to claim 13, wherein:
the membrane filtration operation is an intermittent operation; and
the input data derived from the membrane filtration flow rate includes at least one selected from the group consisting of an average value of the membrane filtration flow rate in a unit period consisting of an operation period and a pause period that follows the operation period, and an integrated value of the membrane filtration flow rate in a predetermined period before the unit period.

15. The inference device according to any one of claims 10 to 14, wherein
the learning model is generated by means of supervised learning using training data that includes a label indicating the state of the separation membrane.

16. The inference device according to claim 15, wherein
the label includes: a label indicating that the state of the separation membrane will become normal; and a label indicating that the state of the separation membrane will become anomalous.

17. The inference device according to claim 16, wherein
the label further includes a label indicating that the state of the separation membrane will become an intermediate state between normality and anomaly.

18. The inference device according to any one of claims 10 to 14, wherein
the learning model is a learning model that is generated by means of unsupervised learning and includes clusters as a learning result.

19. The inference device according to claim 18, wherein:
an output value of the learning model is an outlier or a value which is not the outlier;
in a case where the output value is the outlier, the inference section infers that the state of the separation membrane will become anomalous; and
in a case where the output value is not the outlier, the inference section infers that the state of the separation membrane will become normal.

20. A diffused air volume control device which determines a level of a diffused air volume in accordance with a state of a separation membrane inferred by an inference device according to any one of claims 10 to 19, and controls an air diffusion device so that the air diffusion device performs air diffusion at the determined level.

21. The diffused air volume control device according to claim 20, wherein the diffused air volume control device determines a current level of the diffused air volume in accordance with the state inferred by the inference device and a level determined most recently by the diffused air volume control device.
